(19) **Europäisches Patentamt / European Patent Office / Office européen des brevets**

(11) **EP 3 405 431 B1**

(12) **EUROPEAN PATENT SPECIFICATION**

(45) Date of publication and mention
of the grant of the patent:
**25.02.2026 Bulletin 2026/09**

(21) Application number: **17700715.0**

(22) Date of filing: **20.01.2017**

(51) International Patent Classification (IPC):
$H01M\ 4/133$ (2010.01)    $H01M\ 4/1393$ (2010.01)
$H01M\ 4/36$ (2006.01)    $H01M\ 4/587$ (2010.01)
$H01M\ 10/0525$ (2010.01)    $C01B\ 32/20$ (2017.01)
$C01B\ 32/205$ (2017.01)    $C01B\ 32/21$ (2017.01)

(52) Cooperative Patent Classification (CPC):
**C01B 32/205; C01B 32/21; H01M 4/133;
H01M 4/366; H01M 4/587;** H01M 4/1393;
H01M 2220/20; Y02E 60/10; Y02E 60/50

(86) International application number:
**PCT/EP2017/051255**

(87) International publication number:
**WO 2017/125592 (27.07.2017 Gazette 2017/30)**

(54) **CARBONACEOUS MATERIALS AND METHODS OF USE THEREOF**

GRAPHITZUSAMMENSETZUNGEN UND DEREN VERWENDUNG

COMPOSITIONS DE GRAPHITE ET LEURS UTILISATIONS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **21.01.2016 EP 16152322**

(43) Date of publication of application:
**28.11.2018 Bulletin 2018/48**

(73) Proprietor: **Imerys Graphite & Carbon Switzerland
Ltd.
6743 Bodio (CH)**

(72) Inventors:
• **GULAS, Michal
6713 Malvaglia (CH)**
• **SPAHR, Michael
6500 Bellinzona (CH)**
• **LANZ, Patrick
San Jose, California 95126 (US)**
• **ULMANN, Pirmin
9050 Appenzell Steinegg (CH)**

• **MORIOKA, Hiroyuki
Atsugi-city
Kanagawa 213-0005 (JP)**
• **TAKI, Hiroyuki
Setagaya-ku
Tokyo 157-0072 (JP)**
• **NISHIKAWA, Mika
Kawasaki-city
Kanagawa 216-0005 (JP)**
• **TAKIZAWA, Kanako
Kokubunji-city
Tokyo 185-0036 (JP)**
• **WATANABE, Hiromasa
Yamato-city
Kanagawa 242-0002 (JP)**

(74) Representative: **Eder, Michael
df-mp Patentanwälte Rechtsanwälte PartG mbB
Theatinerstraße 16
80333 München (DE)**

(56) References cited:
**WO-A1-2010/089326    WO-A2-2013/149807**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

## FIELD OF THE DISCLOSURE

The present disclosure relates to compositions comprising at least two different carbonaceous components, at least one being a surface-modified carbonaceous particulate material typically having a relatively high spring-back, and at least one other component being a carbonaceous particulate material (such as graphite) generally having a lower spring-back and/or a higher BET specific surface area than the surface-modified carbonaceous material component. Such compositions are particularly useful for making negative electrodes for lithium-ion batteries and the like in view of their electrochemical properties, particularly in automotive and energy storage applications.

The present disclosure also relates to the use of a low-spring-back carbonaceous particulate materials as an additive in carbonaceous compositions, wherein said compositions are used to prepare anodes for Li-ion batteries, e.g., in order to increase the electrode density, the cell capacity and/or the cycling stability of said battery while maintaining the power density of the cell compared to a cell with an anode absent the carbonaceous additive.

## BACKGROUND

Lithium-ion batteries have become the battery technology of choice for consumer electronics like laptop computers, smart phones, video cameras, and digital still cameras. Compared to other battery chemistries, one of the advantages of the lithium-ion battery system relates to the high energy density and specific energy combined with a high power performance due to an average cell voltage of about 3.5 V and the light weight electrode materials. Over the last more than 20 years since the introduction of the first lithium-ion battery by Sony Corp. in 1991, lithium-ion cells could be significantly improved in terms of energy density. This development was *inter alia* motivated by the increased energy consumption and the trend to miniaturization of the electronic devices that requires decreased accumulator volumes and increased electrochemical cell capacities.

In recent years, lithium-ion batteries have also been considered for automotive applications like hybrid, plug-in, and full electric vehicles, as well as for energy storage systems, for example when integrated into the electric grid in order to buffer peak consumption of electricity in the electric grid and to integrate renewable energy generation like wind and solar energy generation typically being variable in occurrence.

For automotive applications the energy of the cell per volume (cell capacity or energy density) and per weight (specific energy) plays an important role for the improvement of the limited driving range, which is still a major obstacle for electric vehicles. At the same time the charging speed, cycling stability and durability of the battery are even more important for such applications than for consumer electronics batteries due to the significantly higher longevity required by the automotive industry, electricity providers and final users of such batteries.

Because batteries used for energy storage applications are mostly stationary battery applications, cell volume and weight are less important compared to other, e.g., mobile applications. On the other hand, the cell durability and the number of charge and discharge cycles with a given capacity retention are important parameters in such applications. This comes along with ensuring the utmost level of battery safety which is an important prerequisite for the proliferation of the lithium cell technology for all desired applications.

Although the parallel improvement of all major cell parameters such as energy density, power density, durability, and safety would be desirable, improving one parameter often negatively influences other cell parameters. For example, the energy density typically cannot be increased without losing power density, safety, or durability, or *vice versa*. Thus, in the cell design and engineering of a Li-ion battery, the skilled person must usually accept a trade-off between the various cell parameters.

One important component influencing the electrochemical properties of a Li-ion cell is the negative electrode (anode). In some Li-ion batteries, the anode comprises carbonaceous materials such as graphite as an electrochemically active material. Since the carbon material is involved in the electrochemical redox process occurring at the electrodes by intercalating and de-intercalating lithium during the charging and discharging process, respectively, the properties of the carbonaceous material are expected to play an important role in the performance characteristics of the battery. It is well accepted in the field of technology that the graphite negative electrode is limited in terms of charge acceptance and therefore is the main cause of limitations concerning the charging speed, which is an important requirement, especially for automotive lithium-ion batteries.

For these reasons, a variety of different carbonaceous materials such as graphites have been developed in the art. For example, WO 2013/149807 to Imerys Graphite & Carbon describes surface-modification processes for graphitic particles obtainable by either an oxidative treatment or, alternatively, by chemical vapor deposition (CVD) coating, which provides graphite materials having improved surface properties. Although both processes are fundamentally different from each other and produce distinct graphitic particles, both processes lead to graphite particles having advantageous properties over unmodified graphite *per se*. Co-pending PCT application published as WO 2016/008951 A1 (PCT/EP2015/066212), also to Imerys Graphite & Carbon, discloses surface-modified carbonaceous materials such as graphite, wherein the unmodified natural or synthetic carbon precursor is first subjected to an amorphous carbon coating (e.g. by CVD), followed by exposing the coated material to an oxygen-containing atmosphere. This procedure results in surface-modified carbonaceous particles that are more hydrophilic compared to the amorphous carbon-coated particles before the surface oxidation ("activation"). The PCT application published as WO 2010/089326 A1 in the name of Timcal S.A. describes new graphite materials containing highly oriented grain aggregates formed by fused graphite single crystals characterized by a new morphology and surface chemistry.

It was an object to provide a carbonaceous material useful as an active material in negative electrodes for lithium-ion batteries. In particular, there is a continued need in the art for a carbonaceous material with beneficial properties when used as active material in negative electrodes for lithium ion batteries in automotive applications (electric vehicles, etc.), or energy storage applications. Particularly in such applications, it is desirable to improve cycling performance and durability without, however, at the same time sacrificing cell capacity and cell power.

## SUMMARY OF THE DISCLOSURE

The present inventors have surprisingly found that combining at least two different carbonaceous (such as graphitic) materials into a composition of carbonaceous particles and using such composition in an electrode, e.g., a negative electrode, yields electrodes that may improve the cycling performance (e.g., cycling stability), durability, electrode resistance, current discharge properties, reversal capacity, and/or safety of lithium-ion batteries while maintaining their cell capacity and cell power.

Thus, in a first aspect, the present disclosure relates to a composition comprising at least one surface-modified carbonaceous particulate material typically characterized by a higher spring-back, for example of $\geq$ (i.e., greater than or equal to) 20%, or $\geq$ 30%, or $\geq$ 40% ("high spring-back surface-modified carbonaceous particles"). The at least one surface-modified carbonaceous particulate material has a BET Specific Surface Area ("BET SSA") of between 4.5 $m^2$/g and 20 $m^2$/g and the surface of the particles of said surface-modified carbonaceous particulate material is modified chemically by introducing additional functional groups on the surface of the carbonaceous particles, or by adding a complete or incomplete layer of amorphous or non-crystalline carbon on the surface of said carbonaceous particles. As a further component, at least one carbonaceous particulate material (e.g. graphite) is comprised in the composition, characterized by a lower spring-back than the first component, for example a spring-back of $\leq$ (i.e., less than or equal to) 18%, or $\leq$ 15% ("low spring-back carbonaceous particles"). For example, the spring-back of the first, surface-modified (high spring back) carbonaceous particulate material may range from about 20% to about 70%, such as from about 20% to about 25%, from 25% to 65%, from about 30% to about 60%, from about 35% to about 55%, from about 40% to about 60%, from about 45% to about 55%, from 50% to 60%, from about 55% to about 65%, or from about 55% to about 60%. Further, for example, the spring-back of the second (low-spring back) carbonaceous particulate material may range from 5% to 15%, such as from about 5% to about 7%, from about 5% to about 10%, from about 5% to about 12%, from 7% to 12%, from about 10% to about 15%, or from about 12% to about 15%. In some embodiments, the first, surface-modified (high spring-back) carbonaceous particulate material may have a spring-back that is at least 2% greater, at least 5% greater, at least 10% greater, at least 15% greater, at least 20% greater, or at least 25% greater than the spring back of the second (low spring-back) carbonaceous particulate material. For example, the difference in spring-back between the first, surface-modified (high spring-back) carbonaceous particulate material and the second (low spring-back) carbonaceous particulate material may range from 2% to about 30%, from 5% to 25%, from 10% to 20%, from 10% to 25%, from 5% to 15%, or from 10% to 25%. Thus, for example, the first, surface-modified (high spring-back) carbonaceous particulate material may have a spring back ranging from about 20% to about 70% and the second (low spring-back) carbonaceous material may have a spring back ranging from about 5% to about 15%. As another example, the first, surface-modified (high spring-back) carbonaceous particulate material may have a spring back ranging from about 40% to about 60% and the second (low spring-back) carbonaceous material may have a spring back ranging from about 10% to about 15%. In yet another example, the first, surface-modified (high spring-back) carbonaceous particulate material may have a spring back ranging from about 55% to about 65% and the second (low spring-back) carbonaceous material may have a spring back ranging from about 5% to about 12%. Other combinations in accordance with the foregoing discussion are likewise contemplated and encompassed herein. In some embodiments, the at least one low spring-back carbonaceous particulate material has neither been surface-modified by oxidation nor carries a non-graphitic carbon coating. Typically, the BET SSA of the low spring-back carbonaceous particulate material is higher than the BET SSA of the surface-modified carbonaceous material.

In some embodiments, the high spring-back surface-modified carbonaceous particles can be characterized by a core of natural or synthetic graphite wherein their surface has been modified according to a chemical process. In some embodiments, for example, the surface of the carbonaceous (e.g., natural or synthetic graphite) particles may be oxidized and/or may undergo processes that affect crystallinity of the surface. Such processes may include, but are not limited to, the processes set out in WO 2013/149807 or PCT/EP2015/066212, respectively. The high spring-back surface-modified carbonaceous particles can be characterized by a relatively low BET specific surface area (BET SSA). The BET SSA is between 4.5 m$^2$/g and 20 m$^2$/g, or between 4.5 m$^2$/g and 15 m$^2$/g or between 4.5 m$^2$/g and 10 m$^2$/g. The low spring-back carbonaceous particulate material, which may typically be present in an amount of up to 30 wt%, may in these embodiments be characterized as a highly crystalline unmodified graphitic material with a BET SSA generally higher than the BET SSA of the surface-modified high spring-back graphite, e.g. having a BET SSA of more than 5, 6, 7, 8, or 10 m$^2$/g.

As shown in the Example section *infra,* such a combination of at least two different carbonaceous materials can be advantageously used for improving the cycling performance and durability / safety without negatively affecting the cell capacity and cell power of lithium ion batteries, which is particularly useful in automotive and energy storage applications.

Another, related aspect of the present disclosure thus is the use of a composition as defined herein for making a negative electrode of a Li-ion battery.

As noted above, such electrodes, and the corresponding Li-ion batteries, are particularly useful in automotive or energy storage applications, such as electric vehicles, hybrid electric vehicles, or energy storage cells. Accordingly, further aspects of the present disclosure include an electrode, a lithium-ion battery, or an electric vehicle, a hybrid electric vehicle, or an energy storage cell comprising the composition as described herein as an active material in the anode of said Li-ion battery.

The use of a low spring-back carbonaceous material as defined herein as a carbonaceous additive to increase the cell capacity and/or the cycling stability of a Li-ion battery while maintaining the power density of the cell compared to a cell with an anode absent the carbonaceous additive represents another aspect of the present disclosure.

Moreover, the use of a low spring-back carbonaceous particulate material as defined herein as a carbonaceous additive to increase the density of an anode of a Li-ion battery while maintaining the power density of the cell compared to a cell with an anode absent the carbonaceous additive is yet another aspect of the present disclosure.

## DETAILED DESCRIPTION

The present inventors have found that by carefully selecting at least two different carbonaceous components, carbonaceous compositions having favorable properties when used as an active material in negative electrodes of Li-ion batteries can be obtained.

Thus, in one aspect, the present disclosure provides a composition comprising at least one surface-modified carbonaceous particulate material, wherein the at least one surface-modified carbonaceous particulate material has a BET Specific Surface Area ("BET SSA") of between 4.5 m$^2$/g and 20 m$^2$/g and wherein the surface of the particles of said surface-modified carbonaceous particulate material has been modified chemically by introducing additional functional groups on the surface of the carbonaceous particles, or by adding a complete or incomplete layer of amorphous or non-crystalline carbon on the surface of said carbonaceous particles, and at least one other carbonaceous particulate material having a lower spring-back than the surface-modified carbonaceous particulate material ("low spring-back carbonaceous material"). Typically, the BET SSA of the at least one low spring-back carbonaceous material is higher than the BET SSA of the at least one surface-modified carbonaceous particulate material. The term "surface-modified" in connection with graphite or carbonaceous particles is generally understood in the art to refer to particles whose surface has been modified chemically, e.g., by introducing additional functional groups on the surface of the carbonaceous particle, or by adding a layer (which may be complete or incomplete) of amorphous or at least essentially non-crystalline carbon on the surface of the carbonaceous particle. Introducing additional functional groups can for example achieved by exposing carbonaceous particles to oxygen (or species that are capable of releasing oxygen) under controlled conditions (as opposed to a simple exposure of particles to air which may or may not be sufficient to change the chemical constitution of the surface of the particles). Adding amorphous/non-graphitic carbon is typically achieved by pitch-coating, plasma polymerization or various vapor deposition techniques (such as CVD and the like). The term "surface-modified" as used herein in other words does not include surface modifications that are caused by other, non-chemical means, e.g. by merely mechanical manipulations of the particles, such as milling, grinding or abrasion (i.e. "polishing" instead of crushing the particles in order to modify their shape only but not reducing their size in a significant manner).

In some embodiments, the first, surface-modified carbonaceous particulate material has a spring-back of $\geq$ 20%, or $\geq$ 30%, or even $\geq$ 40%. In such embodiments, this component is referred to as a "high spring-back surface-modified carbonaceous particulate material" (or particles). The term "about" as used herein refers to being nearly the same as a referenced amount or value, and should be understood to encompass $\pm$ 5% of the specified amount or value.

In certain embodiments, the BET SSA of the first (typically high spring-back) surface-modified carbonaceous particulate material may be at least 4.5 m$^2$/g but lower than 20 m$^2$/g, or lower than 15 m$^2$/g, or lower than 10 m$^2$/g.

The surface-modified carbonaceous particulate material can in some embodiments be further characterized by a number of additional parameters, alone or in any possible combination:

a) a crystallite size $L_c$ (as measured by XRD) from 50 to 400 nm, or from 60 to 200 nm, or from 80 to 180 nm, or from 100 to 150 nm;

b) a crystallite size $L_a$ (as measured by Raman spectroscopy) from 5 to 100 nm, from 5 to 60 nm, or from 6 to 40 nm;

c) a ratio of $L_c/L_a$ of greater than 1.0, 1.5, 2.0, 2.5, or 3.0;

d) a c/2 distance of between 0.3353 and 0.3370 nm, or between 0.3354 and 0.3365 nm;

e) an oxygen content of greater than 50 ppm, or greater than 90 ppm, or greater than 110 ppm;

f) a Fe content of below 20 ppm, or below 10 ppm, or below 5 ppm; and/or

g) an ash content of below 0.04 %, or below 0.01 %, or below 0.005 %.

In some embodiments, the at least one surface-modified carbonaceous particulate material may be further characterized by one or more of the following parameters, alone or in any combination:

h) a pH value in aqueous suspension ranging from 5.0 to 7.0, or from 5.0 to 6.5, or from 5.2 to 6, or from 5.3 to 5.5;

i) a xylene density from 2.24 to 2.26 g/cm$^3$, or from 2.245 to 2.255 g/cm$^3$, or from 2.25 and 2.255 g/cm$^3$; and/or

j) an $I_D/I_G$ ratio (R(ID/IG)) of below 0.3, or below 0.25, or below 0.2, or below 0.15 when measured with a laser having an excitation wavelength of 632.8 nm (see method section below for further details on the determination of this parameter). In such embodiments, the surface modified carbonaceous material can for example be obtained by exposing the carbonaceous material, such as natural or synthetic graphite to an oxygen-containing atmosphere for a defined period of time.

Suitable methods are for example described in more detail in WO 2013/149807. For example, oxidation of synthetic graphite with a BET surface area ranging from 1 m$^2$/g to about 15 m$^2$/g at temperatures from 500 to 1100 °C with treatment times ranging from 2 to 30 minutes may yield surface-modified graphite that can be used as one component in the claimed compositions. It will be understood that certain adaptions may be necessary (e.g. length of exposure to oxygen-containing gas, choice of starting material, etc.) in order to obtain a material exhibiting the desired parameters outlined above.

In other embodiments, the at least one surface-modified carbonaceous particulate material in the composition may be characterized by comprising carbonaceous core particles coated with a non-graphitic, e.g. amorphous, carbon coating. The at least one surface-modified carbonaceous particulate material in these embodiments may be further characterized by any one of the following parameters, alone or in combination:

k) a xylene density ranging from 2.2 to 2.255 g/cm$^3$, or from 2.23 to 2.25 g/cm$^3$;

l) a crystallite size $L_c$ ranging from 80 to 350 nm, or from 100 to 160 nm;

m) a crystallite size $L_a$ ranging from 5 to 100 nm, or from 20 to 60 nm;

n) an $I_D/I_G$ ratio (R($I_D/I_G$)) of larger than 0.3, or between 0.4 and 1.0, when measured with a laser having an excitation wavelength of 632.8 nm; *and/or*

o) an oxygen content of greater than 80 ppm, or greater than 200 ppm, or greater than 300 ppm.

The at least one surface-modified carbonaceous particulate material coated with a non-graphitic material may in such embodiments for example be obtained by chemical vapor deposition (CVD) or similar techniques. Suitable methods and resulting surface-modified carbonaceous particles that can be used in the context of the present disclosure are for example described in more detail in WO 2013/149807.

For example, the amorphous carbon coating may be obtained by chemical vapor deposition of a powdered natural or synthetic graphite starting material at temperatures from 500 to 1200 °C with a hydrocarbon gas such as acetylene or propylene, typically mixed with an inert carrier gas such as nitrogen or argon, with treatment times typically ranging from 3 to 120 minutes in for example a rotary kiln or fluidized bed. Again, it will be understood that certain adaptations to the process may be necessary (e.g. length of exposure to hydrocarbon gas, choice of hydrocarbon gas and starting material, etc.) in order to obtain a material exhibiting the desired parameters outlined above.

In yet other embodiments, the at least one surface-modified carbonaceous particulate material is characterized by carbon core particles having a hydrophilic non-graphitic, such as amorphous, carbon coating. Such a hydrophilic non-graphitic carbon coating can for example be obtained by first coating carbonaceous core particles such as graphite with a layer of non-graphitic, e.g. amorphous, carbon (for example by CVD), and subsequently exposing the coated particles to an oxygen-containing gas atmosphere under controlled conditions, as described in PCT/EP2015/066212. The exposure to an oxygen containing atmosphere may increase the hydrophilicity of the carbonaceous particulate material, and is, for the sake of convenience, also sometimes referred to herein as "activation", or "surface-oxidation". Accordingly, the carbon coating of said hydrophilic surface-modified carbonaceous particulate material is in certain embodiments comprised of oxidized amorphous carbon.

In some of these embodiments, the at least one hydrophilic surface-modified carbonaceous particulate material may be further characterized by an increased wettability, compared to non-oxidized (i.e. non-activated) coated particles.

Thus, the increased wettability may be expressed by measuring the contact angle of a water drop on a flat surface of the carbonaceous material. In these embodiments, the at least one hydrophilic surface-modified carbonaceous particulate material may exhibit a wettability characterized by

(i) a contact angle after 3 seconds that is less than 90°, or less than 75°, or less than 70°, or less than 65°, and/or
ii) a contact angle after 5 seconds that is less than 60°, or less than 40°, less than 30°, less than 25°, or less than 20°; and/or
(ii) a surface energy of said hydrophilic surface-modified carbonaceous particulate material of at least 59 mJ/m$^2$, or of at least 62, 67 or 70 mJ/m$^2$.

The at least one hydrophilic surface-modified carbonaceous particulate material in the composition may in certain embodiments be further characterized by

(iii) an oxygen content of greater than 200 ppm, greater than 400 ppm, greater than 600 ppm, greater than 700 ppm, or greater than 800 ppm; and/or
(iv) a mesopore area of less than 10.0 m$^2$/g, less than 8.0 m$^2$/g, less than 5.0 m$^2$/g, less than 4.0 m$^2$/g, less than 3.8 m$^2$/g or less than 3.6 m$^2$/g.

Suitable methods and resulting hydrophilic surface-modified (coated) carbonaceous particles are for example described in more detail in PCT/EP2015/066212.

In all of the above embodiments characterizing the at least one surface-modified carbonaceous particulate material, the carbonaceous core of said particles may be selected from natural graphite, synthetic graphite, coke, exfoliated graphite, graphene, few-layer graphene, graphite fibers, nanographite, non-graphitic carbon, carbon black, petroleum- or coal based coke, glassy carbon, carbon nanotubes, fullerenes, carbon fibers, hard carbon, graphitized fine coke, or mixtures thereof, or compositions of such carbon particles which further contain silicon, tin, bismuth, antimony, aluminum, silver, SiO$_X$ (X = 0.2-1.8), or SnO$_X$ (including SnO and SnO$_2$) particles. In some embodiments, the core particles are natural or synthetic graphite particles, or a mixture of natural or synthetic graphite particles and silicon or other heteroatom particles.

It is well understood that particulate materials can be further characterized by their particle size, and/or their particle size distribution (PSD). A variety of methods exist to determine the PSD of a particulate material (see method section for some examples of PSD determination).

Thus, in some embodiments, the at least one surface-modified carbonaceous particulate material may be further characterized by a particle size distribution where the D$_{90}$ ranges from 10 to 50 $\mu$m, or from 15 to 45 $\mu$m, or from 20 to 40 $\mu$m; and/or where the D$_{50}$ ranges from 5 to 40 $\mu$m, or from 7 to 30 $\mu$m, or from 10 to 25 $\mu$m.

The at least one surface-modified carbonaceous particulate material in the composition may optionally be further characterized by one of the following parameters:

i) a tapped density of greater than 0.7 g/cm$^3$, or greater than 0.8 g/cm$^3$, or greater than 0.9 g/cm$^3$, or greater than 0.95 g/cm$^3$, or greater than 1 g/cm$^3$;
ii) a Fe content of below 20 ppm, or below 10 ppm, or below 5 ppm; and/or
iii) an ash content of below 0.04, or below 0.01 %, or below 0.005 %.

As noted above, the composition of the present disclosure further comprises at least one other carbonaceous material which has a lower spring-back compared to the first component, i.e. the surface-modified carbonaceous material. In some embodiments, the low spring-back carbonaceous particulate material may have a BET SSA that is higher than the BET SSA of the surface-modified carbonaceous particulate material.

Accordingly, this low-spring-back carbonaceous particulate material may in some embodiments be characterized by a spring-back of ≤ about 18%, or ≤ about 16%, or ≤ about 15%, or ≤ about 12%.

Alternatively or in addition, the low-spring-back carbonaceous particulate material may further have a BET SSA of ≥ 5 m$^2$/g, or ≥ 6 m$^2$/g, or ≥ 7 m$^2$/g, or ≥ 8 m$^2$/g, or ≥ 9 m$^2$/g, or even ≥ 10 m$^2$/g.

The low-spring-back carbonaceous particulate material as the second component of the composition is typically a carbonaceous material that has not undergone any surface modification (i.e. a chemical modification as explained herein), such as coating with non-graphitic carbon or surface oxidation. On the other hand, the term unmodified in this context still allows purely mechanical manipulation of the carbonaceous particles because the particles in many embodiments need to be milled or otherwise subjected to other mechanical forces, for example in order to obtain the desired particle size distribution.

In some embodiments, the low-spring-back carbonaceous particulate material in the composition is natural or synthetic graphite, optionally a highly crystalline graphite.

As used herein, "highly crystalline" preferably refers to the crystallinity of the graphite particles characterized by the interlayer distance c/2, by the real density (Xylene density), and/or the size of the crystalline domains in the particle (crystalline size $L_c$). In such embodiments, a highly crystalline carbonaceous material may be characterized by a c/2 distance of $\leq 0.3370$ nm, or $\leq 0.3365$ nm, or $\leq 0.3362$ nm, or $\leq 0.3360$ nm, and/or by a Xylene density above 2.230 g cm$^{-3}$, and/or by an $L_c$ of at least 20 nm, or at least 40 nm, or at least 60 nm, or at least 80nm, or at least 100 nm, or more.

The at least one low spring-back carbonaceous material may optionally be further characterized by any one of the following parameters, alone or in combination:

i) a particle size distribution where the $D_{90}$ ranges from 3 to 50 $\mu$m, or from 5 to 30 $\mu$m, or from 6 to 27 $\mu$m, or from 10 to 20 $\mu$m;
ii) a particle size distribution where the $D_{50}$ ranges from 1 to 30 $\mu$m, or from 2 to 20 $\mu$m, or from 3 to 15 $\mu$m, or from 5 to 10 $\mu$m;
iii) a particle size distribution where the $D_{10}$ ranges from 0.5 to 10 $\mu$m, or from 1 to 7 $\mu$m, or from 1 to 5 $\mu$m, or from 2 to 4 $\mu$m;
iv) a crystallite size $L_c$ (as measured by XRD) from 30 to 400 nm, or from 50 nm to 350 nm, or from 70 nm to 250 nm;
v) a Scott density of less than 0.4 g/cm$^3$, or less than 0.3 g/cm$^3$, or less than 0.25 g/cm$^3$;
vi) a xylene density from 2.24 to 2.27 g/cm$^3$, or from 2.25 to 2.265 g/cm$^3$, or from 2.255 and 2.265 g/cm$^3$; *and/or*
vii) an $I_D/I_G$ ratio ($R(I_D/I_G)$) of below 0.3, or below 0.25, or below 0.2, or below 0.15 when measured with a laser having an excitation wavelength of 632.8 nm.

In all of the above embodiments characterizing the at least one low-spring-back carbonaceous material, said material may be selected from natural graphite, synthetic graphite, coke, exfoliated graphite, graphene, few-layer graphene, graphite fibers, nanographite, graphitized fine coke, or non-graphitic carbon, including hard carbon, carbon black, petroleum- or coal based coke, glassy carbon, carbon nanotubes, fullerenes, carbon fibers, mixtures of any of these materials, or compositions of such carbon particles which further contain silicon, tin, bismuth, antimony, aluminum, silver, $SiO_X$ (X = 0.2-1.8), or $SnO_x$ (including SnO and $SnO_2$) particles. In some embodiments, the low-spring-back carbonaceous particles are selected from natural or synthetic graphite particles, or a mixture of natural and synthetic graphite particles.

As can be seen from the Examples, good results have been achieved with compositions wherein the low spring-back component is a synthetic or natural graphite with a spring-back of below 15%, a BET SSA of at least 8 m$^2$/g, and a c/2 distance of $\leq 0.3358$nm. As further shown in the Examples, the low-spring-back component may be a synthetic or natural graphite having a particle size distribution wherein the $D_{90}$ diameter ranges from 6 to 27 $\mu$m, the $D_{50}$ diameter ranges from 3 to 15 $\mu$m, and the $D_{10}$ diameter ranges from 1 to 5 $\mu$m.

The at least one low-spring-back carbonaceous particulate material is typically, but not necessarily present as the minor component of the composition (i.e. less than 50% by weight of the composition). In certain embodiments, the content of the low spring-back graphite is below 30%, or below 25%, or below 20%, or between 1 and 25%, or between 2 and 25%, or between 2.5 and 20%, or between 2 and 18%, or between 2 and 15%, or between 2.5 and 15%, or between 5 and 15% or between 10 and 15% by weight of the composition.

As mentioned above, the first, surface-modified (high spring-back) carbonaceous particulate material may have a spring-back that is at least 2% greater, at least 5% greater, at least 10% greater, at least 15% greater, at least 20% greater, or at least 25% greater than the spring back of the second (low spring-back) carbonaceous particulate material. For example, the difference in spring-back between the first, surface-modified (high spring-back) carbonaceous particulate material and the second (low spring-back) carbonaceous particulate material may range from 2% to 30%, from 5% to 25%, from 10% to 20%, from 10% to 25%, from 5% to 15%, or from 10% to 25%. In some embodiments, the spring-back of the first, surface-modified (high spring back) carbonaceous particulate material may range from about 20% to about 70%, such as from about 20% to about 25%, from 25% to 65%, from about 30% to about 60%, from about 35% to about 55%, from about 40% to about 60%, from about 45% to about 55%, from 50% to 60%, from about 55% to about 65%, or from about 55% to about 60%. Further, for example, the spring-back of the second (low-spring back) carbonaceous particulate material may range from 5% to 15%, such as from about 5% to about 7%, from about 5% to about 10%, from about 5% to about 12%, from 7% to 12%, from about 10% to about 15%, or from about 12% to about 15%. Thus, for example, the first, surface-modified (high spring-back) carbonaceous particulate material may have a spring back ranging from about 20% to about 70% and the second (low spring-back) carbonaceous material may have a spring back ranging from about 5% to about 15%. As another example, the first, surface-modified (high spring-back) carbonaceous particulate material may have a spring back ranging from about 40% to about 60% and the second (low spring-back) carbonaceous material may have a spring back ranging from about 10% to about 15%. In yet another example, the first, surface-modified (high spring-back) carbonaceous particulate material may have a spring back ranging from about 55% to about 65% and the second (low spring-back) carbonaceous material may have a spring back ranging from about 5% to about 12%. Other combinations in accordance with the foregoing discussion are likewise contemplated and encompassed herein.

Besides the two differing carbonaceous particulate materials described in detail above, the composition may optionally further comprise at least one carbonaceous additive, optionally wherein the content of said carbonaceous additive is between 0% and 10 %, or between 0.5% and 5%, or between 1% and 4% by weight. Suitable carbonaceous additives include, but are not limited to, conductive materials such as natural graphite, synthetic graphite, coke, exfoliated graphite, graphene, few-layer graphene, graphite fibers, nanographite, graphitized fine coke, non-graphitic carbon, including hard carbon, carbon black, petroleum- or coal based coke, glassy carbon, carbon nanotubes, including single-walled nanotubes (SWNT), multiwalled nanotubes (MWNT), fullerenes, carbon fibers, or mixtures of any of these materials. For example, the composition may comprise at least one surface-modified particulate carbonaceous material, at least one carbonaceous particulate carbonaceous material (e.g., natural or synthetic graphite) having a lower spring-back than the at least one surface-modified particulate carbonaceous material, and carbon black.

The composition may optionally further comprise at least one non-carbonaceous component, optionally wherein the content of said non-carbonaceous component is larger than 3%, or larger than 5%, or larger than 10%. Suitable non-carbonaceous additives may include silicon, tin, bismuth, antimony, aluminum, silver, $SiO_X$ (X = 0.2-1.8), or $SnO_x$ (including SnO and $SnO_2$) particles.

In addition, since the compositions are particularly useful for preparing negative electrodes for Li-ion batteries, the composition may in some embodiments further comprise a polymer binder material. Suitable polymer binder materials include styrene butadiene rubber (SBR), acrylonitrile butadiene rubber (NBR), carboxymethyl cellulose (CMC), polyacrylic acid and derivatives, polyvinylidene fluoride (PVDF), or mixtures thereof, typically in an amount of between 1 and 5% by weight.

## Use of the Compositions comprising at least one Surface-Modified Carbonaceous Particulate Material and at least one other Carbonaceous Particulate Material

Since the compositions of the present disclosure may have beneficial combined properties when present as an active material in negative electrodes for Li-ion batteries, the compositions as defined herein can be used for preparing negative electrodes for Li-ion batteries, in particular Li-ion batteries empowering electric vehicles, or hybrid electric vehicles, or energy storage units.

Without intending to be bound by theory, it is believed that the compositions disclosed herein (e.g., combining a first carbonaceous particulate material comprising a surface-modified carbonaceous particulate material and a second carbonaceous particulate material comprising a natural or synthetic carbonaceous material that is not surface-modified) when used in an electrode (e.g., a negative electrode of a Li-ion battery) may provide for improved particle-to-particle contact to promote electrical conductivity without inhibiting the ability of the electrolyte to penetrate the electrode to ensure the required ionic conductivity in the electrode. For example, the second carbonaceous particulate material may comprise a relatively high-conductive material having low-spring-back and/or compressibility characteristics that, together with the conductive surface-modified carbonaceous material, provides a three-dimensional structure particularly suitable for electrochemical applications, e.g., as material for the anode of a Li-ion battery. As further noted above, the composition may comprise one or more additional high-conductivity carbonaceous materials, including, but not limited to, carbon black, which may or may not be chemically modified.

Again without intending to be bound by theory, it is believed that the amount of the second (low spring-back) carbonaceous material present may have a significant impact on battery performance, e.g., whereby increasing the amount of the second (low spring-back) carbonaceous particulate material may increase electrical conductivity until that amount is sufficiently high so as to fill spaces within the three-dimensional structure (created by the assembly of electrode materials of the negative electrode that then inhibits the ability of the liquid electrolyte to penetrate the electrode), and as a consequence limits the ionic conductivity which becomes essential especially for high current rate charge and discharge. As noted above, the composition may comprise less than 30% by weight of the second (low spring-back) carbonaceous particulate material, e.g., between 1% and 25%, between 2.5 and 20%, between 2 and 15%, between 2.5 and 15%, between 5 and 15% or between 10 and 15% by weight. For example, the composition may comprise at least 50% by weight of surface-modified carbonaceous particulate material (e.g., from 50% to 99%, from 70% to 98%, from 75% to 95%, from 85% to 95%, or from 80% to 90% by weight surface-modified carbonaceous particulate material), and from 1% to 20% by weight low spring-back carbonaceous particulate material (e.g., from 2% and 18%, from 2% to 15%, from 2.5% to 15%, from 5% to 15%, or from 10% to 15% by weight of low spring-back carbonaceous particulate material. Such compositions, when used in the anode of a Li-ion battery, may provide a suitable balance of cycling stability, electrode resistance, high current discharge properties, and high reversal capacity.

Thus, another aspect of the present disclosure relates to the use of a composition comprising at least one surface-modified carbonaceous particulate material having a high spring-back, for example of equal to or more than 20%, or equal to or more than 30%, or equal to or more than 40%, and at least one carbonaceous particulate material having a lower spring-back, for example equal to or below 18%, or equal to or below 15% for making a negative electrode of a Li-ion battery. Such Li-ion batteries are in some embodiments adapted for use in an electric vehicle, a hybrid electric vehicle, or an energy storage cell.

Typically, the use of the composition for making an anode of a Li-ion battery may involve a composition as defined herein.

**Downstream Products employing the Surface-Modified Carbonaceous Particulate Materials**

Consequently, a negative electrode of a lithium ion battery which comprises a composition as defined herein as an active material represents another aspect of the present disclosure. This includes electrodes where the negative electrodes comprise less than 100% of the carbonaceous particulate material according to the present disclosure as an active material. In other words, negative electrodes containing mixtures with yet other materials (graphite or otherwise) are likewise contemplated as an aspect of the present disclosure.

For example, in some embodiments, the carbonaceous particles may be natural graphite and/or synthetic graphite, and the negative electrode further comprises additional natural graphite, synthetic graphite, and/or graphitized fine coke, preferably wherein the additional natural graphite, synthetic graphite, and/or graphitized fine carbon is present in a minor amount, e.g. an amount ranging from 2% to 10%, or 3% to 5 % by weight of the negative electrode.

The present disclosure also relates in another aspect to lithium ion batteries comprising a composition as defined herein as the active material in the negative electrode of the battery. Again, batteries wherein the negative electrodes contain mixtures with yet other carbonaceous particulate materials are also included in this aspect of the disclosure.

An electric vehicle, hybrid electric vehicle, or plug-in hybrid electric vehicle which comprises a lithium ion battery, wherein the lithium ion battery comprises a composition as defined herein as an active material in the negative electrode of the battery represents yet another aspect of the present disclosure.

In yet another aspect, the present disclosure relates to an energy storage device comprising the hydrophilic surface-modified carbonaceous particulate material according to the present disclosure.

A further aspect of the present disclosure relates to a carbon brush or a friction pad comprising the composition as defined herein.

Moreover, a further aspect of the present disclosure relates to **polymer composite materials** comprising, besides the polymer, the composition as defined herein, typically in a weight ratio of 5-95 % by weight, preferably representing 10 to 85 % by weight of the total composition.

In addition, a ceramic, ceramic precursor material, or a green material comprising the composition as defined herein as a pore forming material are further aspects of the present disclosure.

Yet another aspect of the present disclosure relates to a dispersion comprising a liquid, preferably water or water-based, and a composition as defined herein, wherein the dispersion has a low viscosity at a shear rate of 10 s$^{-1}$ of between 2000 and 4000 mPa·s in an aqueous dispersion containing 40 wt% of said carbonaceous material. Preferably the viscosity at this concentration and shear rate is between 2000 and 3000 mPa s, or between 2300 and 2600 mPa·s.

**Other Uses**

A further aspect of the present disclosure relates to the use of a low spring-back carbonaceous particulate material having a spring-back of $\leq$ 18%, or $\leq$ 15% as a carbonaceous additive to increase the cell capacity and/or the cycling stability of a Li-ion battery while maintaining the power density of the cell compared to a cell with an anode absent the carbonaceous additive. An "additive" in this context means that the electrode comprises another carbonaceous material having a higher spring-back than the above-mentioned low spring-back carbonaceous particulate material as at least a significant portion (such as more than 30%, or more than 40% or more than 50% by weight) of the active material of the negative electrode of said Li-ion battery.

"Maintaining" in this context means that the power density of the cell does not decrease by more than 5%. In certain embodiments, the power density does not decrease by more than 3% or more than 2% compared to a cell without said carbonaceous additive. "Increasing" in this context should be understand to an increase of the respective cell parameter by at least 2%, at least 3%, at least 4% or at least 5%.

In some embodiments of this aspect, the low-spring-back carbonaceous particulate material may be further characterized by any of the additional parameters as described herein, such as a BET SSA of at least 5 m$^2$/g, or at least 6 m$^2$/g, or at least 7 m$^2$/g, and/or being a high crystallinity graphite.

Typically, the low spring-back carbonaceous particulate material is added as a minor component to a composition of carbonaceous particles having a higher spring back, for example above 20%, which may be a surface-modified carbonaceous material as defined herein. In some embodiments, the content of said low spring-back carbonaceous particulate material to be added as a carbonaceous additive is less than 30%, or less than 20%, or between 1 and 20 %, or between 2 and 15% by weight of the composition.

The use of said low spring-back material allows producing negative electrodes which convey a low per cycle loss to a Li-ion battery (cell) including said electrode. In some embodiments, the per cycle loss of such a cell between the 2$^{nd}$ and 12$^{th}$ charging cycle is $\leq$ 0.1 %. In other embodiments, the reversible cell capacity of such a cell is $\geq$ 350 mAh/g.

Another related aspect of the present disclosure refers to the use of said low spring-back carbonaceous particulate material as defined herein to increase the density of an electrode suitable for a Li-ion battery while maintaining the power density of the cell compared to a cell with an anode absent the carbonaceous additive.

"Maintaining" in this context means that the power density of the cell does not decrease by more than 5%. In certain embodiments, the power density does not decrease by more than 3% or more than 2% compared to a cell without said carbonaceous additive.

In some embodiments of this aspect, the low-spring-back carbonaceous particulate material may be further characterized by any of the additional parameters as described herein, such as a BET SSA of at least 5 $m^2/g$, or at least 6 $m^2/g$, or at least 7 $m^2/g$, and/or being a high crystallinity graphite material.

Typically, the low spring-back carbonaceous particulate material in this aspect is added as a minor component to a composition of carbonaceous particles having a higher spring back, for example above 20%, which may be a surface-modified carbonaceous material as defined herein. In some embodiments, the content of said low spring-back carbonaceous particulate material to be added as a carbonaceous additive is less than 30%, or less than 20%, or between 1 and 20 %, or between 2 and 15% by weight of the composition.

The resulting density of the electrode (using the same pressure) may in certain embodiments be increased by at least 3%, 5%, 7%, or 10% compared to a cell with an anode absent the carbonaceous additive.

Suitable methods for determining the various properties and parameters used to define the compositions and carbonaceous materials described herein are set out in more detail below.

**Measurement Methods**

The percentage (%) values specified herein are by weight, unless specified otherwise.

Specific BET Surface Area, DFT Micropore and Mesopore Volume and Area

The method is based on the registration of the absorption isotherm of liquid nitrogen in the range p/p0=0.04-0.26, at 77 K. The nitrogen gas adsorption was performed on a Quantachrome Autosorb-1. Following the procedure proposed by Brunauer, Emmet and Teller (Adsorption of Gases in Multimolecular Layers, J. Am. Chem. Soc., 1938, 60, 309-319), the monolayer capacity can be determined. On the basis of the cross-sectional area of the nitrogen molecule, the monolayer capacity and the weight of sample, the specific surface can then be calculated. The isotherm measured in the pressure range p/p0 0.01-1, at 77 K was processed with DFT calculation in order to assess the pore size distribution, micro- and mesopore volume and area.

Reference: Ravikovitch, P., Vishnyakov, A., Russo, R., Neimark, A., Langmuir 16 (2000) 2311-2320; Jagiello, J., Thommes, M., Carbon 42 (2004) 1227-1232.

Particle Size Distribution by Laser Diffraction

The presence of particles within a coherent light beam causes diffraction. The dimensions of the diffraction pattern are correlated with the particle size. A parallel beam from a low-power laser lights up a cell which contains the sample suspended in water. The beam leaving the cell is focused by an optical system. The distribution of the light energy in the focal plane of the system is then analyzed. The electrical signals provided by the optical detectors are transformed into the particle size distribution by means of a calculator. The method yields the proportion of the total volume of particles to a discrete number of size classes forming a volumetric particle size distribution (PSD). The particle size distribution is typically defined by the values $D_{10}$, $D_{50}$ and $D_{90}$, wherein 10 percent (by volume) of the particle population has a size below the $D_{10}$ value, 50 percent (by volume) of the particle population has a size below the $D_{50}$ value and 90 percent (by volume) of the particle population has a size below the $D_{90}$ value.

The particle size distribution data by laser diffraction quoted herein were measured with a MALVERN Mastersizer S. For determining the PSD, a small sample of a carbon material was mixed with a few drops of a wetting agent and a small amount of water. The sample prepared in the described manner was introduced in the storage vessel of the apparatus (MALVERN Mastersizer S) and after 5 minutes of ultrasonic treatment at intensity of 100% and the pump and stirrer speed set at 40%, a measurement was taken.

References: ISO 13320 (2009) / ISO 14887

Oxygen Content

Oxygen mass fractions in solid samples were evaluated using the principles of inert gas fusion or solid carrier gas heat extraction. The sample was placed in a graphite crucible and inserted into an electrode furnace. The crucible was maintained between the upper and lower electrodes of an impulse furnace. A high current passed through the crucible after purging with inert gas (He or Ar) creating an increase of the temperature (above 2500 °C). Gases generated in the furnace were released into flowing inert gas stream. The gas stream was then sent to the appropriate infrared (O as CO by NDIR) or thermal conductivity (N and H by TCD) detectors for measurement. Instrument calibrations were performed using known reference materials.

Wettability / surface energy measurement

At 20 °C, with a spatula 1 $cm^3$ of graphite powder were spread on a microscope slide and pressed with a pressure of 1 bar in order to prepare a surface as flat as possible. Aqueous solutions with 2.7% weight% of 2-propanol were prepared with distilled, deionized water. The surface tension of such a solution is 59 mN m$^{-1}$ or 59 mJ/m$^2$ (extrapolated from Vazquez et al., J. Chem. Eng. Data, 1995, 40, 611-614). Afterwards, a drop of this solution with a total volume of 10 $\mu$L was placed on the powder surface using an Easy Drop device (Krüss GmbH, Hamburg, Germany).
Using Drop Shape Analysis DSA1 software (Krüss GmbH, Hamburg, Germany) employing Tangent Method 1 with system water (Ström et al., J. Colloid Interface Sci., 1987, 119, 352), the contact angle between the solution droplet and the powder was determined. A material is considered to be hydrophilic when the contact angle in this test is below 90°. If the contact angle is above 90°, the material is considered to be hydrophobic.

pH Value:

1g of graphite powder was dispersed in 50 ml of distilled water with 2 drops of imbentin™ and measured by a pH-meter with a calibrated pH electrode.

Fe Content

This analysis was performed by an SDAR OES simultaneous emission spectrometer. Graphite powder, ground to a maximum particle size of 80 $\mu$m by means of a vibrated mill is compacted to a tablet. The sample was placed onto the excitation stand under argon atmosphere of the spectrometer. Subsequently the fully automatic analysis was initiated.

Ash Content

A low-walled ceramic crucible was ignited at 800° C in a muffle furnace and dried in a desiccator. A sample of 10 g of dry powder (accuracy 0.1 mg) was weighed in a low-walled ceramic crucible. The powder was combusted at a temperature of 815° C to constant weight (at least 8 h). The residue corresponds to the ash content. It is expressed as a percentage of the initial weight of the sample.
References: DIN 51903 and DIN 51701 (dividing process), ASTM C 561-91

Xylene Density

The analysis is based on the principle of liquid exclusion as defined in DIN 51 901. Approx. 2.5 g (accuracy 0.1 mg) of powder was weighed in a 25 ml pycnometer. Xylene was added under vacuum (15 Torr). After a few hours dwell time under normal pressure, the pycnometer was conditioned and weighed. The density represents the ratio of mass and volume. The mass is given by the weight of the sample and the volume is calculated from the difference in weight of the xylene filled pycnometer with and without sample powder. Reference: DIN 51 901

Scott Density (Apparent Density)

The Scott density was determined by passing the dry carbon powder through the Scott volumeter according to ASTM B 329-98 (2003). The powder was collected in a 1 in 3 vessel (corresponding to 16.39 $cm^3$) and weighed to 0.1 mg accuracy. The ratio of weight and volume corresponds to the Scott density. The measurements were taken three times and the average value calculated.
The bulk density of graphite was calculated from the weight of a 250 ml sample in a calibrated glass cylinder.

Tapped density

100 g of dry graphite powder was carefully poured into a graduated cylinder. Subsequently, the cylinder was fixed on the off-centre shaft-based tapping machine and 1500 strokes were run. The reading of the volume was taken and the tap density was calculated.
Reference: -DIN-ISO 787-11

Oil Absorption Number (Carbon Black)

Paraffin oil was added by means of a constant-rate burette to a dried (1 h at 125 °C) carbon black sample in the mixer chamber of the absorptometer. As the sample absorbed the oil, the mixture changed from a free-flowing state to one of a semi-plastic agglomeration, with an accompanying increase in viscosity. This increased viscosity is transmitted to the torque- sensing system. When the viscosity reached a predetermined torque level, the absorptometer and burette shut off simultaneously. The volume of the added oil was read from the burette. The volume of oil per unit mass of carbon black is the oil absorption number.

Oil Absorption Number (Graphite)

A slow filter paper was placed into a special centrifuge metal tube having an inner diameter of 13.5 mm and a sieve on the bottom (18 mesh). In order to wet the filter, 0.5 g of paraffinic oil (Marcol 82 from Exxon Mobile) was filled into the tube and centrifuged for 30 minutes at 521 g ($1g = 9.81$ m/s$^2$, corresponding to 1500 rpm in the Sigma 6-10 centrifuge). After the wetting procedure, the tube was weighed and 0.5 g of graphite powder was added. The graphite was covered with 1.5 g of paraffinic oil and centrifuged for 90 minutes at 521 g. After centrifuging, the tube was weighed. The oil absorption per 100 g of graphite powder was calculated on the basis of the weight increase.

**-** Imerys internal method

Raman Spectroscopy

Raman analyses were performed using LabRAM-ARAMIS Micro-Raman Spectrometer from HORIBA Scientific with a 632.8 nm HeNe LASER. The ratio $I_D/I_G$ was based on the ratio of intensities of the so-called band D and band G. These peaks are measured at 1350 cm$^{-1}$ and 1580 cm$^{-1}$, respectively, and are characteristic for carbon materials.

Crystallite Size $L_a$

Crystallite size $L_a$ may be calculated from Raman measurements using equation:

$$L_a \text{ [Angstrom]} = C \times (I_G/I_D)$$

where constant C has values of $44^{[Å]}$ and $58^{[Å]}$ for lasers with wavelength of 514.5 nm and 632.8 nm, respectively. $I_G$ and $I_D$ are the intensities of the D- and G-band Raman absorption peaks at around 1350 cm$^{-1}$ and 1580 cm$^{-1}$, respectively.

X-Ray Diffraction

XRD data were collected using a PANalytical X'Pert PRO diffractometer coupled with a PANalytical X'Celerator detector. The diffractometer has following characteristics shown in Table 1:

Table 1: Instrument data and measurement parameters

| Instrument | PANalytical X'Pert PRO |
|---|---|
| X-ray detector | PANalytical X'Celerator |
| X-ray source | Cu-K$_\alpha$ |
| Generator parameters | 45 kV - 40 mA |
| Scan speed | 0.07°/s (for $L_c$ and c/2) |
| | 0.01°/s (for [004]/[110] ratio) |
| Divergence slit | 1° (for $L_c$ and c/2) |
| | 2° (for [004]/[110] ratio) |
| Sample spinning | 60 rpm |

The data were analyzed using the PANalytical X'Pert HighScore Plus software.

## Interlayer Spacing c/2

The interlayer space c/2 was determined by X-ray diffractometry. The angular position of the peak maximum of the [002] reflection profiles were determined and, by applying the Bragg equation, the interlayer spacing was calculated (Klug and Alexander, X-ray diffraction Procedures, John Wiley & Sons Inc., New York, London (1967)). To avoid problems due to the low absorption coefficient of carbon, the instrument alignment and non-planarity of the sample, an internal standard, silicon powder, was added to the sample and the graphite peak position was recalculated on the basis of the position of the silicon peak. The graphite sample was mixed with the silicon standard powder by adding a mixture of polyglycol and ethanol. The obtained slurry was subsequently applied on a glass plate by means of a blade with 150 $\mu$m spacing and dried.

## Crystallite Size $L_c$

Crystallite size was determined by analysis of the [002] diffraction profile and determining the widths of the peak profiles at the half maximum. The broadening of the peak should be affected by crystallite size as proposed by Scherrer (P. Scherrer, Göttinger Nachrichten 2, 98 (1918)). However, the broadening is also affected by other factors such X-ray absorption, Lorentz polarization and the atomic scattering factor. Several methods have been proposed to take into account these effects by using an internal silicon standard and applying a correction function to the Scherrer equation. For the present disclosure, the method suggested by Iwashita (N. Iwashita, C. Rae Park, H. Fujimoto, M. Shiraishi and M. Inagaki, Carbon 42, 701-714 (2004)) was used. The sample preparation was the same as for the c/2 determination described above.

## Spring-Back

The spring-back is a source of information regarding the resilience of compacted graphite powders. A defined amount of powder was poured into a die of 20 mm diameter. After inserting the punch and sealing the die, air was evacuated from the die. Compression force of 1.5 metric tons was applied resulting in a pressure of 0.477 t/cm$^2$ and the powder height was recorded. This height was recorded again after pressure had been released. Spring-back is the height difference in percent relative to the height under pressure.

## Adhesion

Adhesion was measured according to the standard T-peel test defined in D1876 (ASTM International), adapted according to the following procedure: The active material mixtures were prepared by combining the main and minor graphite components in the specified ratios with a shaker-mixer for 1 h. Aqueous slurries containing 97% active material, 1% CMC (carboxymethyl cellulose) and 2% SBR (styrene-butadiene rubber) were prepared, cast onto Cu foil at 160 $\mu$m and dried at 80 °C for 15 min and 150 °C overnight. A rectangular test specimen (3.5 cm x 7.14 cm) was cut out from each sheet using a cutting die. Each specimen (25 cm$^2$) was pressed at 400 kN for 1 s and subsequently placed coating down on the adhesive side of transparent tape. A narrow strip (~5 mm x >3.5 cm) of non-adhesive paper was first placed parallel to the short side of the specimens. The transparent tape was cut out along the edges of the specimens. The non-adhesive paper allowed one to fold away two tabs, resulting in a T-shaped adhesion specimen. The tabs were attached to grips and mounted on a peel strength tester (LF Plus, Lloyd Instruments) with a 20 N load cell. Using Nexygen Plus software, a T-peel test was performed at a peeling rate of 100 mm/min and a crosshead limit of 150 mm. The adhesion was calculated by subtracting the average between 140 mm and 150 mm (specimen completely detached) from the average between 20 mm and 100 mm. To convert the adhesion to the T-peel strength (N/m), the obtained adhesion was divided by 0.035 m.

## Electrode density

The electrode density of graphite electrodes on copper foil current collector (18 $\mu$m thickness) with a loading if 7-8 mg/cm$^2$ was measured. Disk-shaped test specimens with a diameter of 12 mm were punched out and pressed at 20 MPa (2 kN/cm$^2$). Electrode densities were determined after releasing the pressure by measuring the electrode thickness with a height gauge (TESA-HITE) and calculating the density from the electrode mass (without copper foil) and the electrode volume.

**Electrochemical Measurements:**

Electrochemical Measurements

The graphite slurries were manufactured with a rotation-revolution mixer (THINKY, ARE-310), in a mass ratio of 98:1:1 graphite, CMC (carboxymethyl cellulose) and SBR (styrene-butadiene rubber). The graphite electrodes, whose loading was controlled at 7-8 mg/cm$^2$, were manufactured by coating the slurry onto copper foil. All electrodes were pressed to 1.7 g/cm$^3$.

The electrochemical measurements were performed in 2032 coin cells at 25 °C. The cells were assembled in a glove box filled with Ar, using a lithium electrode (14 mm diameter, 0.1 mm thickness), a polyethylene separator (16 mm diameter, 0.02 mm thickness), 200 μL of electrolyte (1M LiPF$_6$ in EC:EMC 1:3 v/v) and a graphite electrode (14 mm diameter).

After assembly, measurements were performed with a potentiostat/galvanostat (MACCOR, MODEL 4000). The cells were charged to 5 mV at 0.1 C (a C-rate of 0.1 C means that a complete half-cycle is completed in 1/0.1 = 10 h), followed by a potentiostatic step until the current dropped to 0.005 C, and then discharged to 1.5 V at 0.1 C. The capacity (specific charge) measured during discharge was defined as the reversible capacity. The difference between the capacity measured during charging and the reversible capacity was defined as the irreversible capacity, and the coulombic efficiency, which is defined as a percentage, was calculated by dividing the reversible capacity by the capacity measured during charging.

After adjusting the SOC to 50%, each coin cell was opened and the graphite electrode was reassembled into a new cell together with another graphite electrode that was also at 50% SOC. The obtained symmetric cells, whose voltage should be exactly 0 V, were connected to the potentiostat/galvanostat. The voltage after 20 s of discharge at 1 C divided by the current was defined as the electrode resistance.

As a measure of cycling stability, the per cycle capacity loss of charging cycles 2 to 12, which is expressed as a percentage, was calculated.

The high-current rate performance, which is expressed as a percentage, was calculated from the ratio of the reversible capacity measured at 2 C and 0.2 C discharge rate.

Having described the various aspects of the present disclosure in general terms, it will be apparent to those of skill in the art that many modifications and slight variations are possible without departing from the spirit and scope of the present disclosure.

## EXAMPLES

### Example 1

A number of high-spring-back surface-modified comparative graphite materials were made according to a general method as outlined below. The high-spring-back surface-modified carbonaceous particulate material labelled "Graphite K" is according to the invention. **Table 2a** summarizes the characteristics of these materials (particle size distribution, c/2, $L_c$, $L_a$, ratio $I_D/I_G$, BET SSA and spring-back).

### General Methods for Making Surface-Modified Carbonaceous Particulate Materials

Below is a generalized description how the various carbonaceous materials shown in the Examples can be obtained.

Low spring-back components:

Synthetic graphite:
Petroleum based coke was graphitized at temperatures above 2500°C under inert gas atmosphere and ground to the appropriate particle size distribution.

Natural flake graphite:
Chemically of thermally purified natural flake graphite was ground to the appropriate particle size distribution.

High spring-back components:

**Method A:**

Petroleum or coal based coke was ground and classified or sieved to adjust the desired particle size distribution and the fine coke then was graphitized under inert gas atmosphere at temperatures above 2500 °C. The resulting graphite then was oxidized in air, carbon dioxide, water vapor, or oxygen, at temperatures of 600-1000°C or ozone (at lower temperatures) using a continuously driven or batch rotary furnace, a tumbling bed reactor, a fluidized bed reactor, a fixed bed reactor, or a multiple hearth furnace.

**Method B:**

Petroleum or coal based coke was graphitized at temperatures above 2500°C and the resulting raw graphite was ground and shaped by mechanical treatment to reach the appropriate particle size distribution. The fine graphite then was surface treated in a mixture of hydrocarbon gas or alcohol vapors and nitrogen at temperatures between 600-1100°C in a continuously driven or batch rotary furnace, a tumbling bed reactor, a fluidized bed reactor, a fixed bed reactor, or a multiple hearth furnace. Gas flow, partial pressure, type of precursor gas, residence time and feeding rate were chosen to reach the desired BET SSA, as is well known to those of skill in the art.

**Method C:**

Chemically or thermally purified natural graphite was ground and shaped by mechanical treatment to reach the appropriate particle size distribution. The fine graphite was then surface treated in a mixture of hydrocarbon gas or alcohol vapors and nitrogen at temperatures between 600-1100°C in a continuously driven or batch rotary furnace, a tumbling bed reactor, a fluidized bed reactor, a fixed bed reactor, or a multiple hearth furnace. Gas flow, partial pressure, type of precursor gas, residence time and feeding rate were chosen to reach the desired BET SSA, as is well known to those of skill in the art.

**Method D:**

The graphite obtained by method B was further treated in air, carbon dioxide, water vapor, or oxygen atmosphere, at temperatures between 500 °C and 900 °C or ozone in a continuously driven or batch rotary furnace, a tumbling bed reactor, a fluidized bed reactor, a fixed bed reactor, or a multiple hearth furnace.

**Method E:**

The graphite obtained by method C was further treated in air, carbon dioxide, water vapor, or oxygen atmosphere, at temperatures between 500 °C and 900 °C or ozone in a continuously driven or batch rotary furnace, a tumbling bed reactor, a fluidized bed reactor, a fixed bed reactor, or a multiple hearth furnace.

It is noted that the oxidation treatment can also be conveniently carried out at lower temperatures, or even ambient temperatures, especially when employing the highly reactive gas ozone.

The high-spring-back surface-modified graphite materials were then combined as a main component with a varying amount of several low-spring-back graphite materials, whose characteristics are summarized in **Table 2b** (particle size distribution, c/2, $L_c$, BET SSA, Scott density, oil absorption, spring-back and Xylene density), in a shaker-mixer for about 1 h to obtain an active material mixture.

The active material mixture was subsequently treated with water to obtain an aqueous graphite slurry containing 97% of the above specified active material. The graphite slurry was prepared with a rotation-revolution mixer (THINKY, ARE-310), in a mass ratio of 98:1:1 graphite, CMC (carboxymethyl cellulose) and SBR (styrene-butadiene rubber). The graphite electrode, whose loading was controlled between 7 mg/cm$^2$ and 8 mg/cm$^2$, was manufactured by coating the slurry onto copper foil (thickness 18 $\mu$m). The electrode was pressed to a density of 1.7 g/cm$^3$.

**Table 2a: Properties of various high-spring-back graphite components**

| Graphite | Graphite A* | Graphite M* | Graphite G* | Graphite L* | Graphite K |
|---|---|---|---|---|---|
| Particle size distribution ($\mu$m) <br> $D_{10}$ <br> $D_{50}$ <br> $D_{90}$ | Malvern <br> 6 <br> 14 <br> 29 | Malvern <br> 12 <br> 18 <br> 29 | Malvern <br> 12 <br> 19 <br> 29 | Malvern <br> 5 <br> 12 <br> 25 | Malvern <br> 6 <br> 14 <br> 27 |
| c/2 (002) in nm | 0.3359 | 0.3356 | 0.3356 | 0.3357 | 0.3357 |

(continued)

| Graphite | Graphite A* | Graphite M* | Graphite G* | Graphite L* | Graphite K |
|---|---|---|---|---|---|
| $L_c$ (002) in nm | 130 | 230 | 230 | 130 | 130 |
| $L_a$ (Raman) in nm | 30 | 8 | 8 | 8 | 7 |
| Ratio $I_D/I_G$ | 0.2 | 0.7 | 0.77 | 0.75 | 0.82 |
| BET in $m^2/g$ | 2.9 | 3.5 | 4.4 | 2.7 | 4.5 |
| Spring-back in % | 53 | 20 | 21 | 57 | 60 |
| Process | Method A | Method C | Method E | Method B | Method D |

| Graphite | Graphite C* | Graphite D* | Graphite E* | Graphite F* |
|---|---|---|---|---|
| Particle size distribution ($\mu$m) $D_{10}$ $D_{50}$ $D_{90}$ | Malvern 7 16 32 | Malvern 6 17 38 | Malvern 9 19 36 | Malvern 13 22 35 |
| c/2 (002) in nm | 0.3358 | 0.3357 | 0.3356 | 0.3356 |
| $L_c$ (002) in nm | 140 | 160 | 310 | 320 |
| $L_a$ (Raman) in nm | 20 | 9 | 8 | 15 |
| Ratio $I_D/I_G$ | 0.35 | 0.65 | 0.72 | 0.37 |
| BET in $m^2/g$ | 3.4 | 3.5 | 3.3 | 3.5 |
| Spring-back in % | 58 | 60 | 45 | 24 |
| Process | Method D | Method D | Method D | Method D |
| * comparative example | | | | |

**Table 2b: Properties of various low-spring-back graphite components**

| Graphite | Graphite 1 | Graphite 2 | Graphite 3 | Graphite 4 | Graphite 5 | Graphite 6 |
|---|---|---|---|---|---|---|
| Origin | synthetic | synthetic | synthetic | synthetic | synthetic | natural purif. flake |
| PSD $D_{10}$ $D_{50}$ $D_{90}$ | 1.7 3.6 6.4 | 2.9 6.2 11.2 | 3.2 7.7 15.6 | 5.0 12.1 25.7 | 2.9 6.9 13.9 | 3.1 7.4 15.2 |
| c/2 (002) in nm | 0.3357 | 0.3357 | 0.3357 | 0.3357 | 0.3358 | 0.3355 |
| $L_c$ (002) in nm | 93 | 133 | 171 | 238 | 90 | 210 |
| BET in $m^2/g$ | 16.2 | 10.2 | 9.6 | 8.1 | 12.2 | 8.2 |
| Scott density in $g/cm^3$ | 0.059 | 0.055 | 0.061 | 0.080 | 0.112 | 0.058 |
| Oil absorption | 175 | 179 | 172 | 155 | 148 | 170 |
| Spring-back in % | 10.6 | 9.8 | 10.1 | 11.4 | 14.5 | 6.5 |
| Xylene density in $g/cm^3$ | 2.259 | 2.262 | 2.264 | 2.264 | 2.250 | 2.263 |

**Example 2 (Comparative Example)**

Following the procedure described in **Example 1** a high spring-back graphite (Graphite A) was mixed as the main component with a low-spring-back graphite to produce a negative electrode. Specific wt% of the employed high-spring-back graphite and low-spring-back graphite are given in **Table 3**. Electrochemical measurements characterizing the obtained graphite negative electrode are also shown in **Table 3**.

**Table 3: Reversible capacity and cycling stability characterization of a negative electrode produced with an exemplary graphite composition**

| Main graphite component | Minor graphite component | wt% | Reversible capacity | Cycling stability (%)* |
|---|---|---|---|---|
| Graphite A | Graphite 3 | 0** | 341.5 | 0.123 |
| | | 10 | 344.4 | 0.067 |
| | | 20 | 347.8 | 0.073 |
| * per cycle loss capacity of 2nd -12th charging cycle<br>** comparative example | | | | |

**Example 3 (Comparative Example)**

Following the procedure described in **Example 1** another high-spring-back graphite (Graphite C) was mixed as the main component with low-spring-back graphite to produce a graphite negative electrode. Specific wt% of the employed high-spring-back graphite and low-spring-back graphite are given in **Table 4**. Electrochemical measurements characterizing the obtained graphite negative electrode are also shown in **Table 4**.

**Table 4: Electrode resistance, reversible capacity, high current rate performance characterization of various graphite negative electrode produced with exemplary graphite compositions**

| Main graphite component | Minor graphite component | wt% | Electrode resistance (Ohm) | Rev. Capacity (specific charge) (mAh/g) | High current rate performance 2C/0.2C |
|---|---|---|---|---|---|
| Graphite C | Graphite 3 | 0* | 30.3 Ω | 348 mAh/g | 97% |
| | | 2.5 | 27.0 Ω | 348 mAh/g | |
| | | 5 | 29.2 Ω | 350 mAh/g | 97% |
| | | 15 | 29.7 Ω | 355 mAh/g | 93% |
| | | 30 | 47.3 Ω | 357 mAh/g | 73% |
| | | 100* | 46.3 Ω | 363 mAh/g | 68% |
| | | | | | |
| Graphite C | Graphite 1 | 5 | 26.4 Ω | 355 mAh/g | |
| | | 15 | 28.8 Ω | 357 mAh/g | |
| | | 30 | 29.9 Ω | 360 mAh/g | |
| | | | | | |
| | Graphite 2 | 5 | 29.7 Ω | 350 mAh/g | |
| | | 5 | 28.7 Ω | 351 mAh/g | |
| | | 15 | 20.4 Ω | 353 mAh/g | |
| | | 30 | 24.7 Ω | 351 mAh/g | |
| * comparative example | | | | | |

As Table 4 illustrates, the low spring-back graphite material was found to decrease electrode resistance at relatively lower amounts, however, at higher amounts caused an increase in resistance. Yet, increasing the amount of the low spring-back graphite material resulted in a consistent increase in the reversible capacity of the electrode. This suggests that there is a threshold amount at which additional low-spring graphite material begins to adversely impact battery performance. The current rate performance data for the compositions of Graphite C and Graphite 3 suggest that performance declines considerably when the low spring-back graphite material is greater than about 15% to 30% by weight.

**Example 4 (Comparative Example)**

Following the procedure described in **Example 1** high-spring-back graphite was mixed as the main component with low-spring-back graphite to produce a graphite negative electrode. Specific wt% of the employed high-spring-back graphite and low-spring-back graphite are given in **Table 5.** Electrode parameters characterizing the obtained graphite negative electrode are also shown in **Table 5.**

**Table 5: Adhesion and electrode density characterization of a graphite negative electrode produced with an exemplary composition**

| Main graphite component | Minor graphite component | wt% | Adhesion (N/m) | Electrode density (20 MPa) (g/cm$^3$) |
|---|---|---|---|---|
| Graphite C | Graphite 3 | 0* | 7.32 | 1.397 |
| | | 5 | 5.03 | 1.495 |
| | | 15 | 8.23 | 1.582 |
| | | 30 | 7.20 | 1.646 |
| | | 100* | 5.39 | 1.987 |
| | | | | |
| Graphite C | Graphite 1 | 5 | 7.97 | 1.430 |
| | | 15 | | 1.499 |
| | | 30 | | 1.597 |
| | | | | |
| | Graphite 2 | 5 | 6.29 | 1.46 |
| | | | | |
| | Graphite 4 | 5 | 10.98 | 1.49 |
| | | 15 | | 1.657 |
| | | 30 | | 1.674 |
| * comparative examples | | | | |

**Example 5 (Comparative Example)**

Following the procedure described in **Example 1** a specific mixture of two high-spring-back graphites were mixed with low-spring-back graphite to produce a graphite negative electrode. Ratio of the employed high-spring-back graphite mixture and specific wt% of the low-spring-back graphite component are given in **Table 6.** Electrochemical measurements characterizing the obtained graphite negative electrode are also shown in **Table 6.**

**Table 6: Reversible capacity and cycling stability characterization of another graphite negative electrode produced with a mixture of two high spring-back surface modified graphites and a low spring-back graphite as the minor component**

| Main graphite component | Minor graphite component | wt% | Reversible capacity (mAh/g) | Cycling stability (%) * |
|---|---|---|---|---|
| Graphite A/Graphite C 40:60 | Graphite 3 | 0** | 347.2 | 0.135 |
| Graphite A/Graphite C 40:58 | | 2 | 348.5 | 0.0930 |
| Graphite A/Graphite C 37:58 | | 5 | 351.2 | 0.0839 |
| Graphite A/Graphite C 34:58 | | 8 | 355.1 | 0.0687 |
| * per cycle loss capacity of 2$^{nd}$ -12$^{th}$ charging cycle <br> ** comparative example | | | | |

**Claims**

1. A composition comprising:

   at least one surface-modified carbonaceous particulate material; and
   at least one carbonaceous particulate material having a lower spring-back ("low spring-back carbonaceous particulate material") than the at least one surface-modified carbonaceous particulate material;
   wherein the at least one surface-modified carbonaceous particulate material has a BET Specific Surface Area ("BET SSA") of between 4.5 $m^2$/g and 20 $m^2$/g, or between 4.5 $m^2$/g and 15 $m^2$/g, or between 4.5 $m^2$/g and 10 $m^2$/g;
   wherein the surface of the particles of said surface-modified carbonaceous particulate material has been modified chemically by introducing additional functional groups on the surface of the carbonaceous particles, or by adding a complete or incomplete layer of amorphous or non-crystalline carbon on the surface of said carbonaceous particles;
   optionally wherein the surface-modified carbonaceous particulate material is a high spring-back surface-modified carbonaceous particulate material having a spring-back of equal to or more than 20%, or equal to or more than 30%, or equal to or more than *40%; and/or*
   wherein the at least one low spring-back carbonaceous particulate material has a spring-back of equal to or below 18%, or equal to or below 15%; *further optionally,* wherein the BET SSA of the low spring-back carbonaceous particulate material is higher than the BET SSA of the surface-modified carbonaceous particulate material; and
   further optionally wherein the at least one low spring-back carbonaceous particulate material has neither been surface-modified by oxidation nor carries a non-graphitic carbon coating;
   wherein the spring-back of the carbonaceous particulate materials of the composition is measured after compressing the particulate material by applying a pressure of 0.477 t/$cm^2$;.

2. The composition according to claim 1,
   wherein the surface-modified carbonaceous particulate material is further **characterized by** any one of the following parameters, alone or in combination:

   a) a ratio of $L_c/L_a$ of greater than 1.0, 1.5, 2.0, 2.5, or 3.0;
   b) a crystallite size $L_c$, as measured by XRD, from 50 to 400 nm, or from 60 to 200 nm, or from 80 to 180 nm, or from 100 to 150 nm;
   c) a crystallite size $L_a$, as measured by Raman spectroscopy, from 5 to 100 nm, from 5 to 60 nm, or from 6 to 40 nm;
   d) a c/2 distance of between 0.3353-0.3370 nm, or between 0.3354 and 0.3365 nm;
   e) an oxygen content of greater than 50 ppm, or greater than 90 ppm, or greater than 110 ppm;
   f) a Fe content of below 20 ppm, or below 10 ppm, or below 5 ppm; *and/or*
   g) an ash content of below 0.04%, or below 0.01 %, or below 0.005 %.

3. The composition according to claim 2, wherein the surface-modified carbonaceous particulate material is further **characterized by**

   h) a pH value ranging from 5.0 to 7.0, or from 5.0 to 6.5, or from 5.2 to 6, or from 5.3 to 5.5;
   i) a xylene density from 2.24 to 2.26 g/$cm^3$, or from 2.245 to 2.255 g/$cm^3$, or from 2.25 and 2.255 g/$cm^3$; *and/or*
   j) exhibiting an $I_D/I_G$ ratio ($R(I_D/I_G)$) of below 0.3, or below 0.25, or below 0.2, or below 0.15 when measured with a laser having an excitation wavelength of 632.8 nm;

   optionally wherein the at least one surface-modified carbonaceous particulate material is obtainable by oxidation of a carbonaceous particulate starting material with a BET surface area ranging from 1 $m^2$/g to 15 $m^2$/g at temperatures from 500 to 1100 °C with treatment times ranging from 2 to 30 minutes.

4. The composition according to claim 2, wherein the at least one surface-modified carbonaceous particulate material is **characterized by** comprising carbonaceous core particles with a non-graphitic, optionally amorphous, carbon coating;

   optionally wherein said non-graphitic, optionally amorphous, carbon coating is obtainable by chemical vapor deposition (CVD), such as by chemical vapor deposition treatment of a carbonaceous particulate starting material at temperatures from 500 to 1200 °C with hydrocarbon gas and treatment times ranging from 3 to 120 minutes. further optionally wherein the at least one surface-modified carbonaceous particulate material is further **characterized by**

k) a xylene density ranging from 2.2 to 2.255 g/cm$^3$, or from 2.23 to 2.25 g/cm$^3$;

l) a crystallite size $L_c$ ranging from 80 to 350 nm

m) a crystallite size $L_a$ ranging from 5 to 100 nm;

n) an $I_D/I_G$ ratio ($R(I_D/I_G)$) of larger than 0.3, optionally by an $R(I_D/I_G)$ of between 0.4 and 1.0, when measured with a laser having an excitation wavelength of 632.8 nm; *and/or*

o) an oxygen content of greater than 80 ppm.

5. The composition according to claim 4, wherein the non-graphitic carbon coating of said at least one surface-modified carbonaceous particulate material is a hydrophilic non-graphitic, optionally amorphous, carbon coating;

optionally wherein said at least one hydrophilic surface-modified carbonaceous particulate material of the composition exhibits a wettability **characterized by** (i) a contact angle after 3 seconds that is less than 90°, or less than 75°, less than 70°, or less than 65°, and/or a contact angle after 5 seconds that is less than 60°, or less than 40°, less than 30°, less than 25°, or less than 20°; *and/or* (ii) a surface energy of said hydrophilic surface-modified carbonaceous particulate material of at least 59 mJ/m$^2$, or at least 62, 67 or 70 mJ/m$^2$;

further optionally wherein the carbon coating of said hydrophilic surface-modified carbonaceous particulate material is comprised of oxidized amorphous carbon.

6. The composition according to 5, wherein the at least one hydrophilic surface-modified carbonaceous particulate material in the composition is further **characterized by**

(i) an oxygen content of greater than 200 ppm, greater than 400 ppm, greater than 600 ppm, greater than 700 ppm, or greater than 800 ppm; *and/or*

(ii) a mesopore area of less than 10.0 m$^2$/g, less than 8.0 m$^2$/g, less than 5.0 m$^2$/g, less than 4.0 m$^2$/g, less than 3.8 m$^2$/g or less than 3.6 m$^2$/g.

7. The composition according to any one of claims 1 to 6, wherein the carbonaceous particles forming the core of said at least one surface-modified carbonaceous particulate material are selected from natural graphite, synthetic graphite, coke, hard carbon, graphitized fine coke, mixtures thereof, or compositions of such carbon particles which further contain silicon, tin, bismuth, antimony, aluminum, silver, SiO$_X$, wherein X = 0.2-1.8, or SnO$_x$, including SnO and SnO$_2$, particles;

optionally wherein said carbonaceous core particles are synthetic or natural graphite particles, or a mixture of synthetic or natural graphite particles and silicon particles.

8. The composition according to any one of claims 1 to 7, wherein the at least one surface-modified carbonaceous particulate material is further **characterized by**

a) a particle size distribution ($D_{90}$) ranging from 10 to 50 μm, or from 15 to 45 μm, or from 20 to 40 μm;

b) a particle size distribution ($D_{50}$) ranging from 5 to 40 μm, or from 7 to 30 μm, or from 10 to 25 μm;

c) a tapped density of greater than 0.7 g/cm$^3$, or greater than 0.8 g/cm$^3$, or greater than 0.9 g/cm$^3$, or greater than 0.95 g/cm$^3$, or greater than 1 g/cm$^3$;

d) a Fe content of below 20 ppm, or below 10 ppm, or below 5 ppm; and/or

e) an ash content of below 0.04%, or below 0.01 %, or below 0.005 %.

9. The composition according to any one of claims 1 to 8, wherein the low spring-back carbonaceous particulate material is selected from natural graphite, synthetic graphite, coke, exfoliated graphite, graphene, few-layer graphene, graphite fibers, nanographite, non-graphitic carbon, carbon black, petroleum- or coal based coke, glassy carbon, carbon nanotubes, fullerenes, carbon fibers, hard carbon, graphitized fine coke, or mixtures thereof, or compositions of such carbon particles which further contain silicon, tin, bismuth, antimony, aluminum, silver, SiO$_X$, wherein X = 0.2-1.8, or SnO$_x$, including SnO and SnO$_2$, particles;

optionally wherein said carbonaceous particles are synthetic or natural graphite particles, or a mixture of synthetic or natural graphite particles and silicon particles; further optionally wherein the at least one low spring-back carbonaceous particulate material is a highly crystalline graphite, optionally wherein said graphite has a c/2 distance of equal to or smaller than 0.3370 nm, equal or less than 0.3365 nm, equal or less than 0.3362 nm, or equal or less than 0.3360 nm.

10. The composition according to any one of claims 1 to 9, wherein the at least one low spring-back carbonaceous particulate material is further **characterized by** any one of the following parameters, alone or in combination:

a. a BET SSA of more than 5 $m^2/g$, or more than 6 $m^2/g$, or more than 7 $m^2/g$.
b. a particle size distribution ($D_{90}$) ranging from 3 to 50 $\mu m$, or from 5 to 30 $\mu m$, or from 6 to 27 $\mu m$;
c. a particle size distribution ($D_{50}$) ranging from 1 to 30 $\mu m$, or from 2 to 20 $\mu m$, or from 3 to 15 $\mu m$;
d. a particle size distribution ($D_{10}$) ranging from 0.5 to 10 $\mu m$, or from 1 to 7 $\mu m$, or from 2 to 5 $\mu m$;
e. a crystallite size $L_c$ (as measured by XRD) from 30 to 400 nm, or from 50 nm to 350 nm, or from 70 nm to 250 nm;
f. a Scott density of less than 0.4 $g/cm^3$, or less than 0.3 $g/cm^3$, or less than 0.25 $g/cm^3$;
g. a xylene density from 2.24 to 2.27 $g/cm^3$, or from 2.25 to 2.265 $g/cm^3$, or from 2.255 and 2.265 $g/cm^3$; *and/or*
h. exhibiting an $I_D/I_G$ ratio ($R(I_D/I_G)$) of below 0.3, or below 0.25, or below 0.2, or below 0.15 when measured with a laser having an excitation wavelength of 632.8 nm; *and/or*
i. a $D_{90}$ diameter ranging from 5 $\mu m$ to 30 $\mu m$ a $D_{50}$ diameter ranging from 2 to 20 $\mu m$, and a $D_{10}$ diameter ranging from 1 to 7 $\mu m$

optionally wherein the content of the low spring-back carbonaceous particulate material is below 30%, or below 25%, or below 20%, or between 1 and 25%, or between 2 and 25%, or between 2% and 15%, or between 5 and 15%, or between 10 and 15% by weight of the composition.

11. The composition according to any one of claims 1 to 10, wherein the composition further comprises a polymer binder material, optionally wherein said polymer binder is selected from styrene butadiene rubber (SBR), acrylonitrile butadiene rubber (NBR), carboxymethyl cellulose (CMC), polyacrylic acid or derivatives thereof, polyvinylidene fluoride (PVDF), or mixtures thereof;
further optionally wherein the content of said polymer binder is between 1% and 5% by weight of the composition.

12. The composition according to any one of claims 1 to 11, wherein the at least one surface-modified carbonaceous particulate material has a spring-back that is at least 2% greater, or at least 5% greater, or at least 10% greater, or at least 15% greater than the spring-back of the at least one low spring-back carbonaceous particulate material; *and/or* wherein the at least one surface-modified carbonaceous particulate material has a spring-back ranging from 25% to 65% or from 50% to 60%, and the at least one low spring-back carbonaceous particulate material has a spring-back ranging from 5% to 15% or from 7% to 12%.

13. The composition according to any one of claims 1 to 12, wherein the composition comprises at least 75% by weight of the at least one surface-modified carbonaceous particulate material, and from 2% to 15% by weight of the at least one low spring-back carbonaceous particulate material;
optionally wherein the composition further comprises carbon black.

14. Use of a low spring-back carbonaceous particulate material as defined in any one of claims 1, 9 or 10 as a carbonaceous additive to

i) increase the cell capacity and/or the cycling stability of a Li-ion battery while maintaining the power density of the cell compared to a cell with an anode absent the carbonaceous additive;
optionally wherein the per cycle loss between the 2nd and 12th charging cycle is equal to or below 0.1 % and/or wherein the reversible cell capacity is equal to or above 350 mAh/g; *and/or*
ii) increase the density of an anode of a Li-ion battery while maintaining the power density of the cell compared to a cell with an anode absent the carbonaceous additive;

optionally wherein the electrode density is increased by at least 3%, 5%, 7%, or 10% compared to a cell with an anode absent the carbonaceous additive.

15. An electrode comprising the composition according to any one of claims 1 to 13, or a Li-ion battery comprising the composition according to any one of claims 1 to 13 as active material in the anode of said battery; or an electric vehicle, a hybrid electric vehicle, or an energy storage cell comprising a Li-ion battery comprising the composition according to any one of claims 1 to 13 as active material in the anode of said battery.

# EP 3 405 431 B1

**Patentansprüche**

1. Zusammensetzung, umfassend:

   mindestens ein oberflächenmodifiziertes kohlenstoffhaltiges Partikelmaterial; und
   mindestens ein kohlenstoffhaltiges Partikelmaterial, das eine geringere Rückfederung ("kohlenstoffhaltiges Partikelmaterial mit geringer Rückfederung") als das mindestens eine oberflächenmodifizierte kohlenstoffhaltige Partikelmaterial aufweist;
   wobei das mindestens eine oberflächenmodifizierte kohlenstoffhaltige Partikelmaterial einen BET-spezifischen Oberflächenbereich ("BET SSA") zwischen 4,5 m$^2$/g und 20 m$^2$/g, oder zwischen 4,5 m$^2$/g und 15 m$^2$/g, oder zwischen 4,5 m$^2$/g und 10 m$^2$/g aufweist;
   wobei die Oberfläche der Partikel des oberflächenmodifizierten kohlenstoffhaltigen Partikelmaterials chemisch modifiziert wurde durch Einführen zusätzlicher funktioneller Gruppen auf der Oberfläche der kohlenstoffhaltigen Partikel oder durch Hinzufügen einer vollständigen oder unvollständigen Schicht aus amorphem oder nichtkristallinem Kohlenstoff auf der Oberfläche der kohlenstoffhaltigen Partikel;
   optional, wobei das oberflächenmodifizierte kohlenstoffhaltige Partikelmaterial ein oberflächenmodifiziertes kohlenstoffhaltiges Partikelmaterial mit hoher Rückfederung ist, das eine Rückfederung von gleich oder mehr als 20 % oder gleich oder mehr als 30 % oder gleich oder mehr als 40 % aufweist; *und/oder*
   wobei das mindestens eine kohlenstoffhaltige Partikelmaterial mit geringer Rückfederung eine Rückfederung von gleich oder weniger als 18 % oder gleich oder weniger als 15 % aufweist; *ferner optional,* wobei der BET SSA des kohlenstoffhaltigen Partikelmaterials mit geringer Rückfederung höher ist als der BET SSA des oberflächenmodifizierten kohlenstoffhaltigen Partikelmaterials; und ferner optional, wobei das mindestens eine kohlenstoffhaltige Partikelmaterial mit geringer Rückfederung weder durch Oxidation oberflächenmodifiziert wurde noch eine nicht-graphitische Kohlenstoffbeschichtung trägt;
   wobei die Rückfederung der kohlenstoffhaltigen Partikelmaterialien der Zusammensetzung nach dem Komprimieren des Partikelmaterials durch Anlegen eines Drucks von 0,477 t/cm$^2$ gemessen wird.

2. Zusammensetzung nach Anspruch 1,
   wobei das oberflächenmodifizierte kohlenstoffhaltige Partikelmaterial ferner durch einen der folgenden Parameter, allein oder in Kombination, gekennzeichnet ist:

   a) ein Verhältnis von L$_c$/L$_a$ von mehr als 1,0, 1,5, 2,0, 2,5 oder 3,0;
   b) eine Kristallitgröße L$_c$, gemessen mittels XRD, von 50 bis 400 nm oder von 60 bis 200 nm oder von 80 bis 180 nm oder von 100 bis 150 nm;
   c) eine Kristallitgröße L$_a$, gemessen mittels Raman-Spektroskopie, von 5 bis 100 nm, von 5 bis 60 nm oder von 6 bis 40 nm;
   d) einen c/2-Abstand zwischen 0,3353 und 0,3370 nm oder zwischen 0,3354 und 0,3365 nm;
   e) einen Sauerstoffgehalt von mehr als 50 ppm oder mehr als 90 ppm oder mehr als 110 ppm;
   f) einen Fe-Gehalt von weniger als 20 ppm oder weniger als 10 ppm oder weniger als 5 ppm; *und/oder*
   g) einen Aschegehalt von weniger als 0,04 % oder weniger als 0,01 % oder weniger als 0,005 %.

3. Zusammensetzung nach Anspruch 2, wobei das oberflächenmodifizierte kohlenstoffhaltige Partikelmaterial ferner **gekennzeichnet ist durch**

   h) einen pH-Wert in dem Bereich von 5,0 bis 7,0 oder von 5,0 bis 6,5 oder von 5,2 bis 6 oder von 5,3 bis 5,5;
   i) einer Xylol-Dichte von 2,24 bis 2,26 g/cm$^3$ oder von 2,245 bis 2,255 g/cm$^3$ oder von 2,25 bis 2,255 g/cm$^3$; *und/oder*
   j) mit einem I$_D$/I$_G$-Verhältnis (R(I$_D$/I$_G$)) von unter 0,3 oder unter 0,25 oder unter 0,2 oder unter 0,15, gemessen mit einem Laser mit einer Anregungswellenlänge von 632,8 nm;

   optional, wobei das mindestens eine oberflächenmodifizierte kohlenstoffhaltige Partikelmaterial durch Oxidation eines kohlenstoffhaltigen Partikelausgangsmaterials mit einem BET-Oberflächenbereich in dem Bereich von 1 m$^2$/g bis 15 m$^2$/g bei Temperaturen von 500 bis 1100 °C mit Behandlungszeiten in dem Bereich von 2 bis 30 Minuten erhältlich ist.

4. Zusammensetzung nach Anspruch 2, wobei das mindestens eine oberflächenmodifizierte kohlenstoffhaltige Partikelmaterial **dadurch gekennzeichnet ist, dass** es kohlenstoffhaltige Kernpartikel mit einer nicht-graphitischen, gegebenenfalls amorphen Kohlenstoffbeschichtung umfasst;

optional, wobei die nicht-graphitische, gegebenenfalls amorphe Kohlenstoffbeschichtung durch chemische Gasphasenabscheidung (CVD) erhältlich ist, beispielsweise durch chemische Gasphasenabscheidungsbehandlung eines kohlenstoffhaltigen Partikelausgangsmaterials bei Temperaturen von 500 bis 1200 °C mit Kohlenwasserstoffgas und Behandlungszeiten in dem Bereich von 3 bis 120 Minuten.

Ferner optional, wobei das mindestens eine oberflächenmodifizierte kohlenstoffhaltige Partikelmaterial ferner **gekennzeichnet ist durch**

$\kappa$) eine Xylol-Dichte in dem Bereich von 2,2 bis 2,255 $g/cm^3$ oder von 2,23 bis 2,25 $g/cm^3$;

l) eine Kristallitgröße $L_c$ in dem Bereich von 80 bis 350 nm

m) eine Kristallitgröße $L_a$ in dem Bereich von 5 bis 100 nm;

n) einem $I_D/I_G$-Verhältnis ($R(I_D/I_G)$) von größer als 0,3, optional durch ein $R(I_D/I_G)$ zwischen 0,4 und 1,0, gemessen mit einem Laser mit einer Anregungswellenlänge von 632,8 nm; *und/oder*

o) einem Sauerstoffgehalt von mehr als 80 ppm.

5. Zusammensetzung nach Anspruch 4, wobei die nicht-graphitische Kohlenstoffbeschichtung des mindestens einen oberflächenmodifizierten kohlenstoffhaltigen Partikelmaterials eine hydrophile, nicht-graphitische, gegebenenfalls amorphe Kohlenstoffbeschichtung ist;

optional, wobei das mindestens eine hydrophile oberflächenmodifizierte kohlenstoffhaltige Partikelmaterial der Zusammensetzung eine Benetzbarkeit aufweist, die **gekennzeichnet ist durch** (i) einen Kontaktwinkel nach 3 Sekunden, der weniger als 90°, oder weniger als 75°, weniger als 70° oder weniger als 65° beträgt, und/oder einen Kontaktwinkel nach 5 Sekunden, der weniger als 60°, oder weniger als 40°, weniger als 30°, weniger als 25° oder weniger als 20° beträgt; *und/oder*

(ii) eine Oberflächenenergie des hydrophilen oberflächenmodifizierten kohlenstoffhaltigen Partikelmaterials von mindestens 59 $mJ/m^2$ oder mindestens 62, 67 oder 70 $mJ/m^2$;

ferner optional, wobei die Kohlenstoffbeschichtung des hydrophilen oberflächenmodifizierten kohlenstoffhaltigen Partikelmaterials oxidierten amorphen Kohlenstoff umfasst.

6. Zusammensetzung nach Anspruch 5, wobei das mindestens eine hydrophile oberflächenmodifizierte kohlenstoffhaltige Partikelmaterial in der Zusammensetzung ferner **gekennzeichnet ist durch**

(i) einen Sauerstoffgehalt von mehr als 200 ppm, mehr als 400 ppm, mehr als 600 ppm, mehr als 700 ppm oder mehr als 800 ppm; *und/oder*

(ii) eine Mesoporenfläche von weniger als 10,0 $m^2/g$, weniger als 8,0 $m^2/g$, weniger als 5,0 $m^2/g$, weniger als 4,0 $m^2/g$, weniger als 3,8 $m^2/g$ oder weniger als 3,6 $m^2/g$.

7. Zusammensetzung nach einem der Ansprüche 1 bis 6, wobei die kohlenstoffhaltigen Partikel, die den Kern des mindestens einen oberflächenmodifizierten kohlenstoffhaltigen Partikelmaterials bilden, ausgewählt sind aus natürlichem Graphit, synthetischem Graphit, Koks, Hartkohle, graphitisiertem Feinkoks, Mischungen davon oder Zusammensetzungen solcher Kohlenstoffpartikel, die ferner Silizium, Zinn, Wismut, Antimon, Aluminium, Silber, $SiO_x$, wobei X = 0,2-1,8 oder $SnO_x$-Partikel, einschließlich SnO- und $SnO_2$, enthalten; optional, wobei die kohlenstoffhaltigen Kernpartikel synthetische oder natürliche Graphitpartikel oder eine Mischung aus synthetischen oder natürlichen Graphitpartikeln und Siliziumpartikeln sind.

8. Zusammensetzung nach einem der Ansprüche 1 bis 7, wobei das mindestens eine oberflächenmodifizierte kohlenstoffhaltige Partikelmaterial ferner **gekennzeichnet ist durch**

a) eine Partikelgrößenverteilung ($D_{90}$) in dem Bereich von 10 bis 50 $\mu$m oder von 15 bis 45 $\mu$m oder von 20 bis 40 $\mu$m;

b) eine Partikelgrößenverteilung ($D_{50}$) in dem Bereich von 5 bis 40 $\mu$m oder von 7 bis 30 $\mu$m oder von 10 bis 25 $\mu$m;

c) eine Klopfdichte von mehr als 0,7 $g/cm^3$ oder mehr als 0,8 $g/cm^3$ oder mehr als 0,9 $g/cm^3$ oder mehr als 0,95 $g/cm^3$ oder mehr als 1 $g/cm^3$;

d) von weniger als 20 ppm oder weniger als 10 ppm oder weniger als 5 ppm gekennzeichnet ist; und/oder

e) einen Aschegehalt von weniger als 0,04 % oder weniger als 0,01 % oder weniger als 0,005 %.

9. Zusammensetzung nach einem der Ansprüche 1 bis 8, wobei das kohlenstoffhaltige Partikelmaterial mit geringer Rückfederung ausgewählt ist aus natürlichem Graphit, synthetischem Graphit, Koks, exfoliertem Graphit, Graphen, weniglagigem Graphen, Graphitfasern, Nanographit, nicht-graphitischem Kohlenstoff, Ruß, Koks auf Erdöl- oder Kohlebasis, Glas-Kohlenstoff, Kohlenstoffnanoröhren, Fullerenen, Kohlenstofffasern, Hartkohlenstoff, graphitisiertem Feinkoks oder Mischungen davon oder Zusammensetzungen solcher Kohlenstoffpartikel, die ferner Silizium, Zinn, Wismut, Antimon, Aluminium, Silber, $SiO_x$, wobei X = 0,2-1,8 oder $SnO_x$-Partikel, einschließlich SnO- und $SnO_2$, enthalten; optional, wobei die kohlenstoffhaltigen Partikel synthetische oder natürliche Graphitpartikel oder eine Mischung aus synthetischen oder natürlichen Graphitpartikeln und Siliziumpartikeln sind; ferner optional, wobei das mindestens eine kohlenstoffhaltige Partikelmaterial mit geringer Rückfederung ein hochkristalliner Graphit ist, optional, wobei der Graphit eine c/2-Distanz gleich oder kleiner als 0,3370 nm, gleich oder kleiner als 0,3365 nm, gleich oder kleiner als 0,3362 nm oder gleich oder kleiner als 0,3360 nm aufweist.

10. Zusammensetzung nach einem der Ansprüche 1 bis 9, wobei das mindestens eine kohlenstoffhaltige Partikelmaterial mit geringer Rückfederung ferner durch einen der folgenden Parameter, allein oder in Kombination, gekennzeichnet ist:

a. ein BET SSA von mehr als 5 $m^2$/g oder mehr als 6 $m^2$/g oder mehr als 7 $m^2$/g.

b. eine Partikelgrößenverteilung ($D_{90}$) in dem Bereich 3 bis 50 $\mu$m oder von 5 bis 30 $\mu$m oder von 6 bis 27 $\mu$m;

c. eine Partikelgrößenverteilung ($D_{50}$) in dem Bereich von 1 bis 30 $\mu$m oder von 2 bis 20 $\mu$m oder von 3 bis 15 $\mu$m;

d. eine Partikelgrößenverteilung ($D_{10}$) in dem Bereich von 0,5 bis 10 $\mu$m oder von 1 bis 7 $\mu$m oder von 2 bis 5 $\mu$m;

e. eine Kristallitgröße $L_c$ (gemessen mittels XRD) von 30 bis 400 nm oder von 50 nm bis 350 nm oder von 70 nm bis 250 nm;

f. eine Scott-Dichte von weniger als 0,4 $g/cm^3$ oder weniger als 0,3 $g/cm^3$ oder weniger als 0,25 $g/cm^3$;

g. eine Xylol-Dichte von 2,24 bis 2,27 $g/cm^3$ oder von 2,25 bis 2,265 $g/cm^3$ oder von 2,255 und 2,265 $g/cm^3$; *und/oder*

h. mit einem $I_D/I_G$-Verhältnis ($R(I_D/I_G)$) von unter 0,3 oder unter 0,25 oder unter 0,2 oder unter 0,15, gemessen mit einem Laser mit einer Anregungswellenlänge von 632,8 nm; *und/oder*

i. einen $D_{90}$-Durchmesser in dem Bereich von 5 $\mu$m bis 30 $\mu$m einen $D_{50}$-Durchmesser in dem Bereich von 2 bis 20 $\mu$m und einen $D_{10}$-Durchmesser in dem Bereich von 1 bis 7 $\mu$m

optional, wobei der Gehalt des kohlenstoffhaltigen Partikelmaterials mit geringer Rückfederung weniger als 30 % oder weniger als 25 % oder weniger als 20 % oder zwischen 1 und 25 % oder zwischen 2 und 25 % oder zwischen 2 % und 15 % oder zwischen 5 und 15 % oder zwischen 10 und 15 % des Gewichts der Zusammensetzung beträgt.

11. Zusammensetzung nach einem der Ansprüche 1 bis 10, wobei die Zusammensetzung ferner ein polymeres Bindematerial umfasst, optional wobei das polymere Bindemittel ausgewählt ist aus Styrol-Butadien-Kautschuk (SBR), Acrylnitril-Butadien-Kautschuk (NBR), Carboxymethylcellulose (CMC), Polyacrylsäure oder Derivaten davon, Polyvinylidenfluorid (PVDF) oder Mischungen davon;

ferner optional, wobei der Gehalt des polymeren Bindemittels zwischen 1 % und 5 % Gewichtsanteil der Zusammensetzung beträgt.

12. Zusammensetzung nach einem der Ansprüche 1 bis 11, wobei das mindestens eine oberflächenmodifizierte kohlenstoffhaltige Partikelmaterial eine Rückfederung aufweist, die mindestens 2 % größer oder mindestens 5 % größer oder mindestens 10 % größer oder mindestens 15 % größer ist als die Rückfederung des mindestens einen kohlenstoffhaltigen Partikelmaterials mit geringer Rückfederung; *und/oder* wobei das mindestens eine oberflächenmodifizierte kohlenstoffhaltige Partikelmaterial eine Rückfederung in dem Bereich von 25% bis 65 % oder von 50 % bis 60 % aufweist und das mindestens eine kohlenstoffhaltige Partikelmaterial mit geringer Rückfederung eine Rückfederung in dem Bereich von 5 % bis 15 % oder von 7 % bis 12 % aufweist.

13. Zusammensetzung nach einem der Ansprüche 1 bis 12, wobei die Zusammensetzung mindestens 75 Gew.-% des mindestens einen oberflächenmodifizierten kohlenstoffhaltigen Partikelmaterials und 2 bis 15 Gew.-% des mindestens einen kohlenstoffhaltigen Partikelmaterials mit geringer Rückfederung umfasst; optional, wobei die Zusammensetzung ferner Ruß umfasst.

14. Verwendung eines kohlenstoffhaltigen Partikelmaterials mit geringer Rückfederung, wie in einem der Ansprüche 1, 9 oder 10 definiert, als kohlenstoffhaltiges Additiv zum

i) Erhöhen der Zellkapazität und/oder der Zyklenstabilität einer Lithium-Ionen-Batterie unter Beibehaltung der Leistungsdichte der Zelle im Vergleich zu einer Zelle mit einer Anode ohne das kohlenstoffhaltige Additiv; optional, wobei der Verlust pro Zyklus zwischen dem 2. und 12. Ladezyklus gleich oder kleiner als 0,1 % ist und/oder wobei die reversible Zellkapazität gleich oder größer als 350 mAh/g ist; *und/oder*

ii) Erhöhen der Dichte einer Anode einer Lithium-Ionen-Batterie unter Beibehaltung der Leistungsdichte der Zelle im Vergleich zu einer Zelle mit einer Anode ohne das kohlenstoffhaltige Additiv;

optional wobei die Elektrodendichte um mindestens 3 %, 5 %, 7 % oder 10 % im Vergleich zu einer Zelle mit einer Anode ohne das kohlenstoffhaltige Additiv erhöht wird.

15. Eine Elektrode, umfassend die Zusammensetzung nach einem der Ansprüche 1 bis 13, oder eine Lithium-Ionen-Batterie, umfassend die Zusammensetzung nach einem der Ansprüche 1 bis 13 als aktives Material in der Anode der Batterie; oder ein Elektrofahrzeug, ein Hybrid-Elektrofahrzeug oder eine Energiespeicherzelle, umfassend eine Lithium-Ionen-Batterie, umfassend die Zusammensetzung nach einem der Ansprüche 1 bis 13 als aktives Material in der Anode der Batterie.

**Revendications**

1. Composition comprenant :

au moins un matériau particulaire carboné à surface modifiée ; et

au moins un matériau particulaire carboné ayant un retour élastique plus faible (« matériau particulaire carboné à faible retour élastique ») que l'au moins un matériau particulaire carboné à surface modifiée ;

dans lequel l'au moins un matériau particulaire carboné à surface modifiée présente une surface spécifique BET (« BET SSA ») comprise entre 4,5 $m^2$/g et 20 $m^2$/g, ou entre 4,5 $m^2$/g et 15 $m^2$/g, ou entre 4,5 $m^2$/g et 10 $m^2$/g ;

dans laquelle la surface des particules dudit matériau particulaire carboné à surface modifiée a été modifiée chimiquement par l'introduction de groupes fonctionnels supplémentaires à la surface des particules carbonées, ou par l'ajout d'une couche complète ou incomplète de carbone amorphe ou non cristallin à la surface desdites particules carbonées ;

éventuellement, dans laquelle le matériau particulaire carboné à surface modifiée est un matériau particulaire carboné à surface modifiée à haut retour élastique ayant un retour élastique égal ou supérieur à 20 %, ou égal ou supérieur à 30 %, ou égal ou supérieur à 40 % ; *et/ou*

dans laquelle l'au moins un matériau particulaire carboné à faible retour élastique a un retour élastique égal ou inférieur à 18 %, ou égal ou inférieur à 15 % *; en outre, éventuellement,* dans lequel la valeur BET SSA du matériau particulaire carboné à faible retour élastique est supérieure à la valeur BET SSA du matériau particulaire carboné à surface modifiée ; et en outre, éventuellement, dans laquelle l'au moins un matériau particulaire carboné à faible retour élastique n'a pas été modifié en surface par oxydation et ne comporte pas de revêtement de carbone non graphitique ;

dans lequel le retour élastique des matériaux particulaires carbonés de la composition est mesuré après compression des matériaux particulaires par application d'une pression de 0,477 t/$cm^2$ ;.

2. Composition selon la revendication 1,
dans laquelle le matériau particulaire carboné à surface modifiée est en outre **caractérisé par** l'un quelconque des paramètres suivants, seul ou en combinaison :

a) un rapport $L_c L_a$ supérieur à 1,0, 1,5, 2,0, 2,5 ou 3,0 ;

b) une taille de cristallite $L_c$, mesurée par XRD, de 50 à 400 nm, ou de 60 à 200 nm, ou de 80 à 180 nm, ou de 100 à 150 nm ;

c) une taille de cristallite $L_a$, mesuré par spectroscopie Raman, de 5 à 100 nm, de 5 à 60 nm, ou de 6 à 40 nm ;

d) une distance c/2 comprise entre 0,3353 et 0,3370 nm, ou entre 0,3354 et 0,3365 nm ;

e) une teneur en oxygène supérieure à 50 ppm, ou supérieure à 90 ppm, ou supérieure à 110 ppm ;

f) une teneur en fer inférieure à 20 ppm, ou inférieure à 10 ppm, ou inférieure à 5 ppm ; *et/ou*

g) une teneur en cendres inférieure à 0,04 %, ou inférieure à 0,01 %, ou inférieure à 0,005 %.

3. Composition selon la revendication 2, dans laquelle le matériau particulaire carboné à surface modifiée est en outre **caractérisé par**

h) une valeur de pH comprise entre 5,0 et 7,0, ou entre 5,0 et 6,5, ou entre 5,2 et 6, ou entre 5,3 et 5,5 ;

i) une densité de xylène de 2,24 à 2,26 g/$cm^3$, ou de 2,245 à 2,255 g/$cm^3$, ou de 2,25 à 2,255 g/$cm^3$ ; *et/ou*

j) présentant un rapport $I_D$/$I_D$ ($R(I_D/I_G)$) inférieur à 0,3, ou inférieur à 0,25, ou inférieur à 0,2, ou inférieur à 0,15 lorsqu'il est mesuré à l'aide d'un laser dont la longueur d'onde d'excitation est de 632,8 nm ;

éventuellement, dans laquelle l'au moins un matériau particulaire carboné à surface modifiée peut être obtenu par oxydation d'un matériau particulaire carboné de départ ayant une surface BET comprise entre 1 $m^2$/g et 15 $m^2$/g à des températures comprises entre 500 et 1 100°C et des durées de traitement comprises entre 2 et 30 minutes.

**4.** Composition selon la revendication 2, dans laquelle l'au moins un matériau particulaire carboné à surface modifiée est **caractérisé en ce qu'**il comprend des particules de noyau carbonées avec un revêtement de carbone non graphique, éventuellement amorphe ; éventuellement, dans laquelle ledit revêtement de carbone non graphique, éventuellement amorphe, peut être obtenu par dépôt chimique en phase vapeur (CVD), par exemple par traitement par dépôt chimique en phase vapeur d'un matériau de départ de particules carbonées à des températures comprises entre 500 et 1200°C avec un gaz hydrocarboné et des durées de traitement comprises entre 3 et 120 minutes.
En outre, éventuellement, l'au moins un matériau particulaire carboné à surface modifiée est **caractérisé par**

$\kappa$) une densité de xylène allant de 2,2 à 2,255 g/$cm^3$, ou de 2,23 à 2,25 g/$cm^3$ ;
l) une taille de cristallite $L_c$ allant de 80 à 350 nm
m) une taille de cristallite $L_a$ allant de 5 à 100 nm ;
n) un rapport $I_D/I_G$ (R($I_D/I_G$)) supérieur à 0,3, éventuellement un R($I_D/I_G$) compris entre 0,4 et 1,0, lorsqu'il est mesuré à l'aide d'un laser dont la longueur d'onde d'excitation est de 632,8 nm ; *et/ou*
o) une teneur en oxygène supérieure à 80 ppm.

**5.** Composition selon la revendication 4, dans laquelle le revêtement de carbone non graphique dudit au moins un matériau particulaire carboné à surface modifiée est un revêtement de carbone non graphique hydrophile, éventuellement amorphe ;

éventuellement, dans laquelle ledit au moins un matériau particulaire carboné à surface hydrophile modifiée de la composition présente une mouillabilité **caractérisée par** (i) un angle de contact après 3 secondes inférieur à 90°, ou inférieur à 75°, inférieur à 70°, ou inférieur à 65°, et/ou un angle de contact après 5 secondes inférieur à 60°, ou inférieur à 40°, inférieur à 30°, inférieur à 25°, ou inférieur à 20° *; et/ou*
(ii) une énergie de surface dudit matériau particulaire carboné à surface hydrophile modifiée d'au moins 59 mJ/$m^2$, ou d'au moins 62, 67 ou 70 mJ/$m^2$ ;
en outre, éventuellement, dans laquelle le revêtement de carbone dudit matériau particulaire carboné à surface hydrophile modifiée est constitué de carbone amorphe oxydé.

**6.** Composition selon 5, dans laquelle l'au moins un matériau particulaire carboné à surface hydrophile modifiée dans la composition est en outre **caractérisé par**

(i) une teneur en oxygène supérieure à 200 ppm, supérieure à 400 ppm, supérieure à 600 ppm, supérieure à 700 ppm ou supérieure à 800 ppm ; *et/ou*
(ii) une surface de mésopore inférieure à 10,0 $m^2$/g, inférieure à 8,0 $m^2$/g, inférieure à 5,0 $m^2$/g, inférieure à 4,0 $m^2$/g, inférieure à 3,8 $m^2$/g ou inférieure à 3,6 $m^2$/g.

**7.** Composition selon l'une quelconque des revendications 1 à 6, dans laquelle les particules carbonées formant le noyau dudit au moins un matériau particulaire carboné à surface modifiée sont choisies parmi le graphite naturel, le graphite synthétique, le coke, le carbone dur, le coke fin graphité, leurs mélanges, ou des compositions de telles particules de carbone contenant en outre du silicium, de l'étain, du bismuth, de l'antimoine, de l'aluminium, de l'argent, du $SiO_x$, dans laquelle X = 0,2-1,8, ou $SnO_x$, y compris des particules SnO et $SnO_2$ ; éventuellement, dans laquelle lesdites particules de noyau carbonées sont des particules de graphite synthétique ou naturel, ou un mélange de particules de graphite synthétique ou naturel et de particules de silicium.

**8.** Composition selon l'une quelconque des revendications 1 à 7, dans laquelle l'au moins un matériau particulaire carboné à surface modifiée est en outre **caractérisé par**

a) une distribution granulométrique ($D_{90}$) allant de 10 à 50 $\mu$m, ou de 15 à 45 $\mu$m, ou de 20 à 40 $\mu$m ;
b) une distribution granulométrique ($D_{50}$) allant de 5 à 40 $\mu$m, ou de 7 à 30 $\mu$m, ou de 10 à 25 $\mu$m ;
c) une densité apparente supérieure à 0,7 g/$cm^3$, ou supérieure à 0,8 g/$cm^3$, ou supérieure à 0,9 g/$cm^3$, ou supérieure à 0,95 g/$cm^3$, ou supérieure à 1 g/$cm^3$ ;
d) une teneur en fer inférieure à 20 ppm, ou inférieure à 10 ppm, ou inférieure à 5 ppm ; et/ou

e) une teneur en cendres inférieure à 0,04 %, ou inférieure à 0,01 %, ou inférieure à 0,005 %.

9. Composition selon l'une quelconque des revendications 1 à 8, dans laquelle le matériau particulaire carboné à faible retour élastique est choisi parmi le graphite naturel, le graphite synthétique, le coke, le graphite exfolié, le graphène, le graphène multicouche, les fibres de graphite, la nanographite, le carbone non graphique, le noir de carbone, le coke à base de pétrole ou de charbon, le carbone vitreux, les nanotubes de carbone, les fullerènes, les fibres de carbone, le carbone dur, le coke fin graphité, ou leurs mélanges, ou des compositions de telles particules de carbone contenant en outre du silicium, de l'étain, du bismuth, de l'antimoine, de l'aluminium, de l'argent, du $SiO_x$, dans laquelle X = 0.2-1,8, ou $SnO_x$, y compris des particules SnO et $SnO_2$ ;
éventuellement, dans laquelle lesdites particules carbonées sont des particules de graphite synthétique ou naturel, ou un mélange de particules de graphite synthétique ou naturel et de particules de silicium ; en outre, éventuellement, dans laquelle l'au moins un matériau particulaire carboné à faible retour élastique est un graphite hautement cristallin, éventuellement dans laquelle ledit graphite a une distance c/2 égale ou inférieure à 0,3370 nm, égale ou inférieure à 0,3365 nm, égale ou inférieure à 0,3362 nm, ou égale ou inférieure à 0,3360 nm.

10. Composition selon l'une quelconque des revendications 1 à 9, dans laquelle l'au moins un matériau particulaire carboné à faible retour élastique est en outre **caractérisé par** l'un quelconque des paramètres suivants, seul ou en combinaison :

   a. une valeur BET SSA supérieure à 5 $m^2$/g, ou supérieure à 6 $m^2$/g, ou supérieure à 7 $m^2$/g.
   b. une distribution granulométrique ($D_{90}$) allant de 3 à 50 $\mu$m, ou de 5 à 30 $\mu$m, ou de 6 à 27 $\mu$m ;
   c. une distribution granulométrique ($D_{50}$) allant de 1 à 30 $\mu$m, ou de 2 à 20 $\mu$m, ou de 3 à 15 $\mu$m ;
   d. une distribution granulométrique ($D_{10}$) allant de 0,5 à 10 $\mu$m, ou de 1 à 7 $\mu$m, ou de 2 à 5 $\mu$m ;
   e. une taille de cristallite $L_c$ (mesurée par XRD) de 30 à 400 nm, ou de 50 nm à 350 nm, ou de 70 nm à 250 nm ;
   f. une densité de Scott inférieure à 0,4 $g/cm^3$, ou inférieure à 0,3 $g/cm^3$, ou inférieure à 0,25 $g/cm^3$ ;
   g. une densité de xylène comprise entre 2,24 et 2,27 $g/cm^3$, ou entre 2,25 et 2,265 $g/cm^3$, ou entre 2,255 et 2,265 $g/cm^3$ ; *et/ou*
   h. présentant un rapport $I_D/I_G$ ($R(I_D/I_G)$) inférieur à 0,3, ou inférieur à 0,25, ou inférieur à 0,2, ou inférieur à 0,15 lorsqu'il est mesuré à l'aide d'un laser ayant une longueur d'onde d'excitation de 632,8 nm ; *et/ou*
   i. un diamètre $D_{90}$ compris entre 5 $\mu$m et 30 $\mu$m un diamètre $D_{50}$ compris entre 2 et 20 $\mu$m, et un diamètre $D_{10}$ compris entre 1 et 7 $\mu$m

éventuellement, dans laquelle la teneur en particules carbonées à faible retour élastique est inférieure à 30 %, ou inférieure à 25 %, ou inférieure à 20 %, ou comprise entre 1 et 25 %, ou entre 2 et 25 %, ou entre 2 et 15 %, ou entre 5 et 15 %, ou entre 10 et 15 % en poids de la composition.

11. Composition selon l'une quelconque des revendications 1 à 10, dans laquelle la composition comprend en outre un liant polymère, éventuellement dans lequel ledit liant polymère est choisi parmi le caoutchouc styrène-butadiène (SBR), le caoutchouc acrylonitrile-butadiène (NBR), la carboxyméthylcellulose (CMC), l'acide polyacrylique ou ses dérivés, le fluorure de polyvinylidène (PVDF), ou des mélanges de ceux-ci ;
en outre, éventuellement, dans laquelle la teneur en liant polymère est comprise entre 1 % et 5 % en poids de la composition.

12. Composition selon l'une quelconque des revendications 1 à 11, dans laquelle l'au moins un matériau particulaire carboné à surface modifiée a un retour élastique supérieur d'au moins 2 %, ou d'au moins 5 %, ou d'au moins 10 %, ou d'au moins 15 % au retour élastique de l'au moins un matériau particulaire carboné à faible retour élastique ; *et/ou* dans laquelle l'au moins un matériau particulaire carboné à surface modifiée a un retour élastique compris entre 25 % et 65 % ou entre 50 % et 60 %, et l'au moins un matériau particulaire carboné à faible retour élastique a un retour élastique compris entre 5 % et 15 % ou entre 7 % et 12 %.

13. Composition selon l'une quelconque des revendications 1 à 12, dans laquelle la composition comprend au moins 75 % en poids de l'au moins un matériau particulaire carboné à surface modifiée, et de 2 % à 15 % en poids de l'au moins un matériau particulaire carboné à faible retour élastique ;
éventuellement, dans laquelle la composition comprend en outre du noir de carbone.

14. Utilisation d'un matériau particulaire carboné à faible retour élastique tel que défini dans l'une quelconque des revendications 1, 9 ou 10 en tant qu'additif carboné pour

i) augmenter la capacité de la cellule et/ou la stabilité du cycle d'une batterie Li-ion tout en maintenant la densité de puissance de la cellule par rapport à une cellule dont l'anode est dépourvue d'additif carboné ; éventuellement, dans laquelle la perte par cycle entre le 2$^e$ et le 12$^e$ cycle de charge est égale ou inférieure à 0,1 % et/ou dans laquelle la capacité réversible de la cellule est égale ou supérieure à 350 mAh/g ; *et/ou*

ii) augmenter la densité de l'anode d'une batterie Li-ion tout en maintenant la densité de puissance de la cellule par rapport à une cellule dont l'anode est dépourvue d'additif carboné ;

éventuellement, dans laquelle la densité de l'électrode est augmentée d'au moins 3 %, 5 %, 7 % ou 10 % par rapport à une cellule dont l'anode est dépourvue d'additif carboné.

15. Électrode comprenant la composition selon l'une quelconque des revendications 1 à 13, ou batterie Li-ion comprenant la composition selon l'une quelconque des revendications 1 à 13 en tant que matériau actif dans l'anode de ladite batterie ; ou un véhicule électrique, un véhicule électrique hybride, ou une cellule de stockage d'énergie comprenant une batterie Li-ion comprenant la composition selon l'une quelconque des revendications 1 à 13 en tant que matériau actif dans l'anode de ladite batterie.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2013149807 A
- WO 2016008951 A1
- EP 2015066212 W
- WO 2010089326 A1

### Non-patent literature cited in the description

- **BRUNAUER, EMMET ; TELLER**. Adsorption of Gases in Multimolecular Layers. *J. Am. Chem. Soc.*, 1938, vol. 60, 309-319
- **RAVIKOVITCH, P ; VISHNYAKOV, A ; RUSSO, R ; NEIMARK, A**. *Langmuir*, 2000, vol. 16, 2311-2320
- **JAGIELLO, J ; THOMMES, M**. *Carbon*, 2004, vol. 42, 1227-1232
- **VAZQUEZ et al.** *J. Chem. Eng. Data*, 1995, vol. 40, 611-614
- **STRÖM et al.** *J. Colloid Interface Sci.*, 1987, vol. 119, 352
- **KLUG ; ALEXANDER**. X-ray diffraction Procedures. John Wiley & Sons Inc., 1967
- **N. IWASHITA ; C. RAE PARK ; H. FUJIMOTO ; M. SHIRAISHI ; M. INAGAKI**. *Carbon 42*, 2004, 701-714